# EUROPEAN PATENT APPLICATION

(11) **EP 2 187 663 A1**
(43) Date of publication of application: **19.05.2010**
(21) Application number: 08748659.3
(22) Date of filing: 22.05.2008
(51) Int. Cl.: H04W 4/00

(54) **METHOD, TERMINAL AND SERVER FOR FINDING VISITED SERVICE PROVIDER**

(30) Priority: 09.08.2007 CN 200710140625; 28.09.2007 CN 200710151412; 07.03.2008 CN 200810007427
(71) Applicant: Huawei Technologies Co., Ltd., Longgang District, Shenzhen Guangdong 518129 (CN)
(72) Inventor: JIANG, Feihu, Shenzhen, Guangdong 518129 (CN); SHI, Teng, Shenzhen, Guangdong 518129 (CN); ZHANG, Yuanyuan, Shenzhen, Guangdong 518129 (CN); YUE, Peiyu, Shenzhen, Guangdong 518129 (CN); SUN, Ruinan, Shenzhen, Guangdong 518129 (CN); ZHANG, Jie, Shenzhen, Guangdong 518129 (CN)
(74) Representative: Thun, Clemens
(86) International application number: PCT/CN2008/071054
(87) International publication number: WO 2009/018733

(57) **Abstract**

A method for finding a visited Service Provider (SP) disclosed herein includes: after accessing a network, a terminal obtains current network information; and obtains the visited SP information through the home SP information preset on the terminal and the current network information. A method for finding a visited SP disclosed herein includes: after receiving a visited SP information request sent by a terminal, an SP server searches for the current network information, obtains the visited SP information, and sends the visited SP information to the terminal. Accordingly, a terminal for finding a visited SP and an SP server are disclosed. Through the present invention, a roaming terminal may find the visited SP conveniently.

## Description

### FIELD OF THE INVENTION

The present invention relates to communication technologies, and in particular, to a method, terminal and server for finding a visited Service Provider (SP).

### BACKGROUND OF THE INVENTION

With the development of mobile communication technologies, more and more multimedia services emerge on terminals, for example, mobile video, television broadcast, video conference, online education, and interactive games. Especially, the mobile video service is appealing to users.

One of the prevailing mobile video technologies is based on the wholesale mode of the application-layer technology. In the wholesale mode, one or more SPs exist in an Internet Protocol (IP) platform. The SP provides its common channels and characteristic channels as mobile video services for user terminals.

Before implementing mobile video services, each terminal must sign an agreement with the SP to determine the home relation between the terminal and the SP. The SP that signs the agreement with the terminal is called home SP of the terminal, and the home SP may perform management (for example, authentication, and charging) for the terminal.

When a terminal needs to receive or is receiving the mobile video service provided by a non-home SP, the terminal is in the roaming state.

When a terminal is roaming, only the SP that signs a roaming agreement with the home SP of the terminal can provide services for the terminal. An SP which provides services for a roaming terminal is called a visited SP.

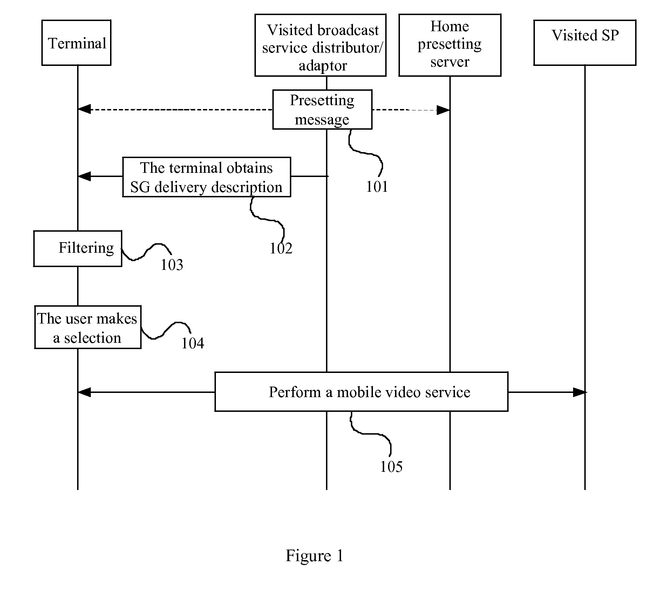

An IP platform may include more than one SP. When a terminal is roaming, the area where the terminal is roaming may have more than one IP platform. Therefore, a roaming terminal needs to select a visited SP of the terminal among multitudinous non-home SPs. The method commonly used currently for finding a visited SP is shown in Figure 1:
Step 101: According to the presetting message given by the home presetting server, the terminal configures home Broadcast workgroup Subscription Management Filter Coder (BSMFilterCoder), and non-home BSMFilterCoder. After completion of configuration, the terminal sends a confirmation message to the home presetting server.
The home BSMFilterCoder information and non-home BSMFilterCoder information configured by the terminal describe the home SP of the terminal and the non-home SP that signs an agreement with the home SP.
Step 102: The visited Broadcast Service Distributor/Adaptor (BSD/A) broadcasts the information that includes the Service Guide Delivery Description (SGDD). The roaming terminal searches for a proper frequency, receives the information broadcast by the visited BSD/A, and obtains the SGDD.
Step 103: The terminal retrieves the home BSMFilterCoder and the non-home BSMFilterCoder configured by the terminal, compares them with the BSMFilterCoder in the SGDD information broadcast by the BSD/A, filters out the visit information of the Service Guide (SG) of the SP that signs an agreement with the home SP of the terminal, namely, the visit information of the SG of the visited SP.
Step 104: The user selects the desired SG on the terminal according to the filtered SG.
Many SPs may sign an agreement with the home SP of the terminal in the roaming area. Any of such SPs may be a visited SP of the terminal. Moreover, the mobile video services provided by such SPs may have different contents. The SG obtained in step 103 describes the service information provided by each SP. The terminal displays the service information to the user, and the user selects the SG according to his requirement.
Step 105: According to the visit information of the SG selected by the user, the terminal connects to the visited SP of the SG, and begins the mobile video service.
In the process of research and practice of the prior art, the inventor finds the following defects in the prior art:
   The terminal needs to configure the information about the home SP of the terminal and the information about the non-home SP that signs an agreement with the home SP. The SPs which sign an agreement with a specific SP vary from time to time, so the terminal has to obtain the presetting message of the home presetting server before roaming, and configure the information about the home SP of the terminal and the information about the non-home SP that signs an agreement with the home SP according to the presetting message. In order for the terminal to obtain the presetting message of the home presetting server and perform configuration according to the presetting message, the terminal needs to support the Open Mobile Alliance (OMA) Device Management (DM) protocol V1.2 specifications. The implementation is rather complicated, and is impossible on the terminal which does not support OMA DM V1.2 specifications.
   Meanwhile, when the terminal compares the received SGDD, the terminal needs to compare the SGDD of all SPs in the roaming area one by one, and filter out the information about the SP that signs an agreement with the home SP of the terminal. The comparison process is complicated. With more SPs, the workload is higher, and more terminal system resources are occupied.

### SUMMARY OF THE INVENTION

The present invention provides a method, terminal and server for finding a visited SP so that a roaming terminal may find the visited SP conveniently.

In order to achieve the foregoing objective, an aspect of the present invention is to provide a method for finding a visited SP at the terminal side. The method includes:
obtaining, by a terminal, current network information after accessing a network; and
obtaining information about a visited SP through preset home SP information and the current network information after determining that the terminal is roaming.

Another aspect of the present invention is to provide a method for finding a visited SP at the server side. The method includes:
receiving a visited SP information request sent by a terminal; and
by an SP server, obtaining visited SP information according to information about the SP that signs an agreement with the home SP and the current network information carried in the request after determining that the terminal is roaming, and sending the visited SP information to the terminal.

Further, another aspect of the present invention is to provide a terminal, which includes:
a presetting unit, adapted to preset home SP information; and
a processing unit, adapted to obtain current network information, and obtain visited SP information according to the home SP information and the current network information after determining that the terminal is roaming.

Further still, another aspect of the present invention is to provide an SP server, which includes:
a storing unit, adapted to store SP information of the server and the information about the SP that signs a roaming agreement with the home SP;
a receiving unit, adapted to receive a visited SP information request sent by a terminal; and
a visited SP information obtaining unit, adapted to obtain visited SP information according to information about the SP that signs a roaming agreement with the home SP and the current network information carried in the request after determining that the terminal is roaming, and send the visited SP information to the terminal.

As seen from the foregoing technical solution, the terminal only needs to configure the information about the home SP of the terminal, rather than configure both the information about the home SP of the terminal and the information about the non-home SP that signs an agreement with the home SP. The home SP of each terminal is generally fixed and seldom changes. Generally, the terminal does not need to change the home SP information of the terminal once such information is configured. Such information may be input by the user, or written by the operator when the terminal is put into use, or written in other ways. The writing mode is flexible, without participation of the home presetting server. Therefore, the terminal does not need to support specific specifications, and the technical solution may be implemented on any terminal that supports any specifications.

Further still, another aspect of the present invention is to provide a method for finding a visited SP. The method includes:
obtaining, by a terminal, current network information after accessing a network; and
searching for the current network information according to the preset network identifier of the visited SP that signs a roaming agreement with a home SP after determining that the terminal is roaming, and obtaining visited SP information from the current network information.

Further still, another aspect of the present invention is to provide a terminal, which includes:
a presetting unit, adapted to preset home SP information and the information about the visited SP that signs a roaming agreement with the home SP; and
a processing unit, adapted to: obtain current network information, search for the current network information according to the network identifier included in the visited SP information after determining that the terminal is roaming, and obtain the visited SP information from the current network information.

As seen from the foregoing technical solution, in the process of searching for the visited SP information, the visited SP information can be obtained by only comparing the network identifier, so the workload of the terminal is reduced obviously.

### BRIEF DESCRIPTION OF THE DRAWINGS

Figure 1 is a flowchart of the prior art;
Figure 2 is a signaling flowchart of the method for finding a visited SP in the first embodiment of the present invention;
Figure 3 is a terminal-side flowchart of the method for finding a visited SP in the first embodiment of the present invention;
Figure 4 is a server-side flowchart of the method for finding a visited SP in the first embodiment of the present invention;
Figure 5 is a signaling flowchart of the method for finding a visited SP in the second embodiment of the present invention;
Figure 6 is a terminal-side flowchart of the method for finding a visited SP in the second embodiment of the present invention;
Figure 7 is a server-side flowchart of the method for finding a visited SP in the second embodiment of the present invention;
Figure 8 is a signaling flowchart of the method for finding a visited SP in the third embodiment of the present invention;
Figure 9 is a signaling flowchart of the method for finding a visited SP in the fourth embodiment of the present invention;
Figure 10 is a signaling flowchart of the method for finding a visited SP in the fifth embodiment of the present invention;
Figure 11 is a signaling flowchart of the method for finding a visited SP in the sixth embodiment of the present invention;
Figure 12 is a signaling flowchart of the method for finding a visited SP in the seventh embodiment of the present invention;
Figure 13 is a signaling flowchart of the method for finding a visited SP in the eighth embodiment of the present invention;
Figure 14 shows a structure of a system for finding a visited SP in the first embodiment of the present invention;
Figure 15 shows a structure of a terminal in the second embodiment of the present invention;
Figure 16 shows a structure of a terminal in the third embodiment of the present invention;
Figure 17 is a signaling flowchart of the method for finding a visited SP in the ninth embodiment of the present invention;
Figure 18 is a signaling flowchart of the method for finding a visited SP in the tenth embodiment of the present invention;
Figure 19 is a signaling flowchart of the method for finding a visited SP in the 11th embodiment of the present invention; and
Figure 20 is a signaling flowchart of the method for finding a visited SP in the 12th embodiment of the present invention.

### DETAILED DESCRIPTION OF THE INVENTION

Embodiments of the present invention provide a method, system, terminal, and server for finding a visited SP, where SP information is preset on the terminal so that the terminal can find the visited SP conveniently when roaming.

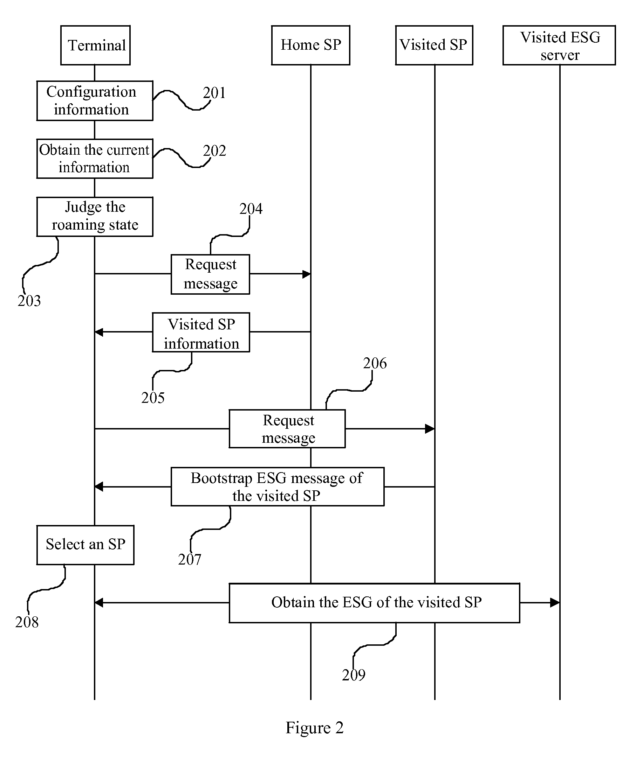

Figure 2 is a signaling flowchart of the method for finding a visited SP in the first embodiment of the present invention. The method includes the following steps:
Step 201: The terminal presets information about the home SP.
Many IP platforms may exist in an area and each IP platform may have multiple SPs. Among the SPs, some SPs are differentiated from other SPs only through the SP identifier, and some SPs are differentiated from other SPs through both the identifier of the IP platform of the SP and the identifier of the SP. Meanwhile, in order for the terminal to access the bootstrap Electronic Service Guide (ESG) server of the home SP, it is also necessary to preset the Uniform Resource Locator (URL) of the bootstrap ESG server of the home SP. Therefore, the information about the home SP may be an identifier of the IP platform where the home SP is located, identifier of the home SP, and URL of the bootstrap ESG server of the home SP.

Through the Electronic Service Guide (ESG), a user may access data of multimedia services conveniently, browse the video channels, ESG and price list provided by the SP, choose to purchase a content in the price list, and log in to a website to browse web pages.

A bootstrap ESG includes the information about the ESG provider and the visit information of the ESG. The bootstrap ESG server is a network function entity of the SP, and may exist independently or may be integrated with other network entities. The bootstrap ESG server is generally adapted to store and manage the information about the home SP and the information about the visited SP that signs a roaming agreement with the home SP. The information about the home SP may be: an identifier of the IP platform where the home SP is located, and identifier of the home SP; or identifier of the home SP. The information about the visited SP may be: an identifier of the IP platform where the visited SP is located, identifier of the visited SP, and URL of the bootstrap ESG server of the visited SP; or identifier of the visited SP, and URL of the bootstrap ESG server of the visited SP; or identifier of the IP platform where the visited SP is located, and identifier of the visited SP.

As required, the information about the home SP may further include: original network ID of the home SP, and network ID.

Step 202: The terminal obtains the current network information.

The terminal accesses the current Digital Video Broadcast-Handheld (DVB-H) network, receives the Network Information Table_actual (NIT_actual) in the Transport Stream (TS), resolves the linkage_descriptor carried in it, and obtains the IP platform identifier.

At this time, the current original network ID and the network ID may also be obtained as required.

Step 203: The terminal judges whether it is roaming. If the terminal is roaming, the process proceeds to step 204; otherwise, the process proceeds to the non-roaming processing.

The terminal compares the current network information with the home SP information configured in the terminal, and judges whether the terminal is roaming. If the current network information includes no content that matches the home SP information preset in the terminal, the terminal is roaming; otherwise, the terminal is not roaming.

If the home SP information configured in the terminal includes the identifier of the IP platform where the home SP is located, the IP platform identifier may be compared first. If the current network information includes no IP platform identifier that matches the identifier (which is preset in the terminal) of the IP platform where the home SP is located, the terminal is roaming, and it is not necessary to further compare the SP information under each IP platform. If the current network information includes the IP platform identifier that matches the identifier (which is preset in the terminal) of the IP platform where the home SP is located, when the service scope of the IP platform is consistent with that of the SP, the terminal is not roaming, and it is not necessary to further compare the SP information under each IP platform; when the service scope of the IP platform is different from that of the SP, the original network ID and the network ID may be further compared to check whether there exists the information that matches the original network ID and the network ID (which are preset in the terminal) of the home SP. If no such information exists, the terminal is roaming; otherwise, the terminal is not roaming.

Step 204: The terminal sends a request message to the home SP, requesting the information about the visited SP that signs a roaming agreement with the home SP.

Through a preset URL of the bootstrap ESG server of the home SP, the terminal sends a request message to the bootstrap ESG server of the home SP, requesting the information about the visited SP that signs a roaming agreement with the home SP. This request message includes: request type, current network information of the terminal, and identifier of the home SP; or request type, current network information of the terminal, identifier of the home SP, and identifier of the IP platform where the home SP is located.

Step 205: After receiving the request message, the home SP searches out the information about the visited SP that signs a roaming agreement with the home SP among the current network information of the terminal, and sends the information about the visited SP that signs a roaming agreement with the home SP to the terminal.

After receiving the request message, the bootstrap ESG server of the home SP searches out the information about the visited SP that signs a roaming agreement with the home SP among the current network information of the terminal, and sends the information about the visited SP that signs a roaming agreement with the home SP to the terminal. The information about the visited SP may be: an identifier of the IP platform where the visited SP is located, identifier of the visited SP, and URL of the bootstrap ESG server of the visited SP; or identifier of the visited SP, and URL of the bootstrap ESG server of the visited SP; or identifier of the IP platform where the visited SP is located, and identifier of the visited SP; or identifier of the visited SP.

After obtaining the information about the visited SP, the terminal proceeds with the subsequent process to accept the service of the visited SP.

Step 206: The terminal sends a request message to the bootstrap ESG server of the visited SP, requesting the bootstrap ESG of the visited SP.

The terminal may receive the bootstrap ESG of the visited SP through interaction or broadcast. If the visited SP information returned by the bootstrap ESG server of the home SP includes the URL of the bootstrap ESG server of the visited SP, the terminal may request the bootstrap ESG of the visited SP from the bootstrap ESG server of the visited SP through interaction according to the URL of the bootstrap ESG server of the visited SP.

When the terminal receives the bootstrap ESG of the visited SP through interaction, the terminal sends a request message to the bootstrap ESG server of the visited SP according to the URL of the bootstrap ESG server of the visited SP, requesting the bootstrap ESG of the visited SP. The request message includes a request type.

Step 207: The terminal receives the bootstrap ESG of the visited SP.

After the terminal receives the bootstrap ESG of the visited SP through interaction, the bootstrap ESG server of the visited SP sends the bootstrap ESG of the visited SP to the terminal according to the received request message, and the terminal obtains the bootstrap ESG of the visited SP.

After the terminal receives the bootstrap ESG of the visited SP through broadcast, the bootstrap ESG server of the visited SP broadcasts the bootstrap ESG of the visited SP, and the terminal receives the bootstrap ESG of the visited SP broadcast by the bootstrap ESG server according to the known address specified in the protocol, thus obtaining the bootstrap ESG of the visited SP, without performing step 206 in Figure 2.

Step 208: According to the received information (which is described in the bootstrap ESG of the visited SP) about the visited SP that signs a roaming agreement with the home SP, the terminal obtains the visit information of the ESG of the visited SP. If multiple SPs exist, one SP is selected from them.

Step 209: According to the visit information of the ESG, the terminal obtains the ESG of the visited SP from the ESG server of the visited SP, and displays the ESG to the user.

The mode of the terminal obtaining the ESG of the visited SP from the ESG server of the visited SP may be interaction or broadcast.

If the interaction mode is applied, the terminal sends a request message to the ESG server of the visited SP according to the visit information of the ESG. After receiving the message, the ESG server of the visited SP sends the ESG of the visited SP to the terminal.

If the broadcast mode is applied, the ESG server of the visited SP broadcasts the information that includes the ESG of the visited SP, and the terminal receives the ESG of the visited SP according to the visit information of the ESG.

The user accepts the multimedia service of the visited SP through the ESG of the visited SP.

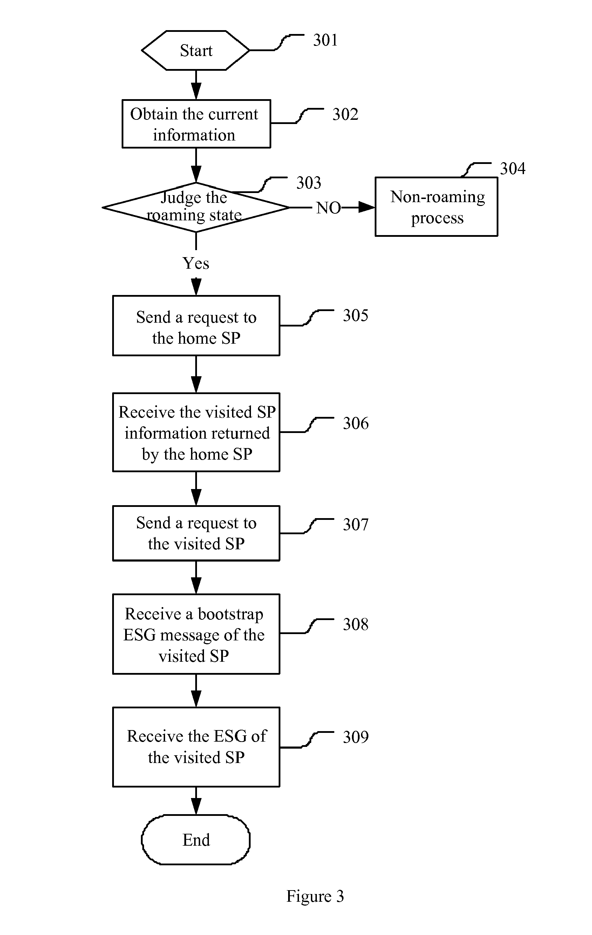

The foregoing text describes the signaling process of the method for finding a visited SP in the first embodiment of the present invention. From the perspective of the terminal, the process of the method for finding a visited SP in the first embodiment of the present invention is shown in Figure 3, and includes the following steps:

Step 301: The terminal starts the multimedia service.

Before this step, the home SP information needs to be preset on the terminal. The home SP information may be an identifier of the IP platform where the SP is located, identifier of the home SP, and URL of the bootstrap ESG server of the home SP.

As required, the information about the home SP may further include: original network ID of the home SP, and network ID.

Step 302: The terminal obtains the current network information.

The terminal accesses the current DVB-H network, receives the NIT_actual in the TS, resolves the linkage_descriptor in it, and obtains the identifier of the current IP platform.

At this time, the original network ID and the network ID may also be obtained as required.

Step 303: The terminal judges whether it is roaming. If the terminal is roaming, the process proceeds to step 305; otherwise, the process proceeds to step 304 to begin the non-roaming processing.

The terminal compares the current network information with the home SP information configured in the terminal, and judges whether the terminal is roaming. If the current network information includes no content that matches the home SP information preset in the terminal, the terminal is roaming; otherwise, the terminal is not roaming.

If the home SP information configured in the terminal includes the identifier of the IP platform where the home SP is located, the IP platform identifier may be compared first. If the current network information includes no IP platform identifier that matches the identifier (which is preset in the terminal) of the IP platform where the home SP is located, the terminal is roaming, and it is not necessary to further compare the SP information under each IP platform. If the current network information includes the IP platform identifier that matches the identifier (which is preset in the terminal) of the IP platform where the home SP is located, when the service scope of the IP platform is consistent with that of the SP, the terminal is not roaming, and it is not necessary to further compare the SP information under each IP platform; when the service scope of the IP platform is different from that of the SP, the original network ID and the network ID may be further compared to check whether there exists the information that matches the original network ID and the network ID (which are preset in the terminal) of the home SP. If no such information exists, the terminal is roaming; otherwise, the terminal is not roaming.

Step 305: The terminal sends a request message to the home SP, requesting the information about the visited SP that signs a roaming agreement with the home SP.

Through a preset URL of the bootstrap ESG server of the home SP, the terminal sends a request message to the bootstrap ESG server of the home SP, requesting the information about the visited SP that signs a roaming agreement with the home SP. This request message includes: request type, current network information of the terminal, and identifier of the home SP; or request type, current network information of the terminal, identifier of the home SP, and identifier of the IP platform where the home SP is located.

After receiving the request message, the bootstrap ESG server of the home SP searches out the information about the visited SP that signs a roaming agreement with the home SP among the current network information of the terminal, and sends the information about the visited SP that signs a roaming agreement with the home SP to the terminal. The information about the visited SP may be: an identifier of the IP platform where the visited SP is located, identifier of the visited SP, and URL of the bootstrap ESG server of the visited SP; or identifier of the visited SP, and URL of the bootstrap ESG server of the visited SP; or identifier of the IP platform where the visited SP is located, and identifier of the visited SP; or identifier of the visited SP.

Step 306: The terminal receives the visited SP information returned by the home SP.

After obtaining the information about the visited SP, the terminal proceeds with the subsequent process to accept the service of the visited SP.

Step 307: The terminal sends a request message to the bootstrap ESG server of the visited SP, requesting the bootstrap ESG of the visited SP.

The terminal may receive the bootstrap ESG of the visited SP through interaction or broadcast. If the visited SP information returned by the bootstrap ESG server of the home SP includes the URL of the bootstrap ESG server of the visited SP, the terminal may request the bootstrap ESG of the visited SP from the bootstrap ESG server of the visited SP through interaction according to the URL of the bootstrap ESG server of the visited SP.

When the terminal receives the bootstrap ESG of the visited SP through interaction, the terminal sends a request message to the bootstrap ESG server of the visited SP according to the URL of the bootstrap ESG server of the visited SP, requesting the bootstrap ESG of the visited SP. The request message includes a request type.

Step 308: The terminal receives the bootstrap ESG of the visited SP.

After the terminal receives the bootstrap ESG of the visited SP through interaction, the bootstrap ESG server of the visited SP sends the bootstrap ESG of the visited SP to the terminal according to the received request message, and the terminal obtains the bootstrap ESG of the visited SP.

After the terminal receives the bootstrap ESG of the visited SP through broadcast, the bootstrap ESG server of the visited SP broadcasts the bootstrap ESG of the visited SP, and the terminal receives the bootstrap ESG of the visited SP broadcast by the bootstrap ESG server according to the known address specified in the protocol, thus obtaining the bootstrap ESG of the visited SP, without performing step 307 in Figure 3.

Step 309: According to the received information (which is described in the bootstrap ESG of the visited SP) about the visited SP that signs a roaming agreement with the home SP, the terminal obtains the visit information of the ESG of the visited SP. If multiple SPs exist, one SP is selected from them.

According to the visit information of the ESG, the terminal obtains the ESG of the visited SP from the ESG server of the visited SP, and displays the ESG to the user.

The mode of the terminal obtaining the ESG of the visited SP from the ESG server of the visited SP is interaction or broadcast.

If the interaction mode is applied, the terminal sends a request message to the ESG server of the visited SP according to the visit information of the ESG. After receiving the message, the ESG server of the visited SP sends the ESG of the visited SP to the terminal.

If the broadcast mode is applied, the ESG server of the visited SP broadcasts the information that includes the ESG of the visited SP, and the terminal receives the ESG of the visited SP according to the visit information of the ESG.

The user accepts the multimedia service of the visited SP through the ESG of the visited SP.

The process is ended.

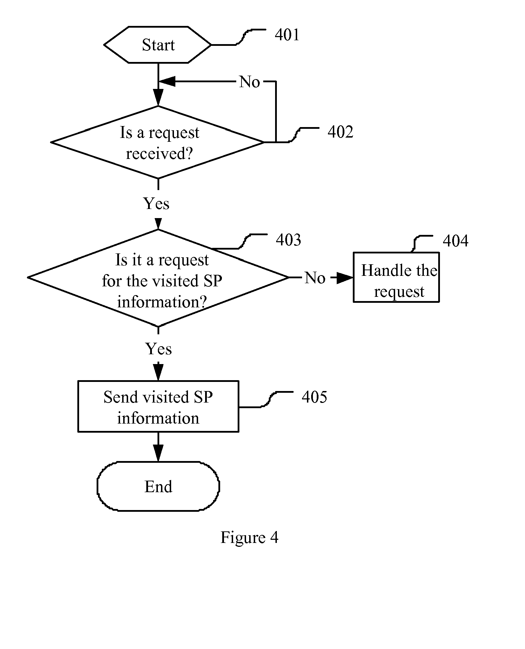

Figure 4 is a flowchart of the method for finding a visited SP in the first embodiment of the present invention. The method includes the following steps:

Step 401: The bootstrap ESG server of the SP starts working.

Each SP may be a home SP of a terminal. The bootstrap ESG server of each SP stores the information about the home SP and the information about the SP that signs a roaming agreement with the home SP, and manages such information. The information about the SP may be: an identifier of the IP platform where the SP is located, and identifier of the SP; or identifier of the SP. The information about the SP that signs a roaming agreement with the home SP may be: an identifier of the IP platform that includes the SP that signs a roaming agreement with the home SP, identifier of the SP that signs a roaming agreement with the home SP, and URL of the bootstrap ESG server of the SP that signs a roaming agreement with the home SP; or identifier of the SP that signs a roaming agreement with the home SP, and URL of the bootstrap ESG server of the SP that signs a roaming agreement with the home SP; or identifier of the IP platform that includes the SP that signs a roaming agreement with the home SP, and identifier of the SP that signs a roaming agreement with the home SP.

Step 402: The bootstrap ESG server of the SP judges whether a request message is received from the terminal. If a request message is received, the process proceeds to step 403; otherwise, the process returns to step 402 to continue waiting for the request message.

Step 403: The bootstrap ESG server of the SP judges whether the request message is a request for the visited SP information. If it is a request for the visited SP information, the process proceeds to step 405; otherwise, the process returns to step 404 to handle the request.

According to the request type in the request message sent from the terminal, the bootstrap ESG server of the home SP judges whether the request message is a request for the visited SP information.

Step 405: The bootstrap ESG server of the SP sends the visited SP information to the terminal.

If the process proceeds to step 405, the request message sent by the terminal is a request for the visited SP information. The request message includes: request type, current network information of the terminal, identifier of the home SP; or request type, current network information of the terminal, identifier of the home SP, identifier of the IP platform where the home SP is located, and bootstrap ESG of the home SP.

According to the information about the SP that covers the bootstrap ESG server and the information about the SP that signs a roaming agreement with the former SP saved in the bootstrap ESG server, the bootstrap ESG server of the SP searches out the information about the SP that signs a roaming agreement with the SP that covers the bootstrap ESG server among the SP information included in the current network information of the terminal in the request message, and sends it as the visited SP information of the terminal to the terminal.

The information about the visited SP may be: an identifier of the IP platform where the visited SP is located, identifier of the visited SP, and URL of the bootstrap ESG server of the visited SP; or identifier of the visited SP, and URL of the bootstrap ESG server of the visited SP; or identifier of the IP platform where the visited SP is located, and identifier of the visited SP; or identifier of the visited SP.

The process is ended.

The foregoing technical solution shows that in the method for finding a visited SP in the first embodiment of the present invention, the terminal only needs to configure the information about the home SP of the terminal, rather than configure both the information about the home SP of the terminal and the information about the non-home SP that signs an agreement with the home SP. The home SP of each terminal is generally fixed and seldom changes. Generally, the terminal does not need to change the home SP information of the terminal once such information is configured. Such information may be input by the user, or written by the operator when the terminal is put into use, or written in other ways. The writing mode is flexible, without participation of the home presetting server. Therefore, the terminal does not need to support specific specifications, and the technical solution may be implemented on any terminal that supports any specifications.

Meanwhile, if the home SP information configured in the terminal includes the identifier of the IP platform where the home SP is located, it is appropriate to compare the IP platform identifier first. In most cases, the IP platform identifier is enough for judging whether the terminal is roaming or not, without the need of comparing all SP information one by one. The subsequent search is performed by the bootstrap ESG server of the SP, and therefore, the workload of the terminal is reduced drastically.

Further, the method for finding a visited SP in the first embodiment of the present invention provides a mode of visiting the bootstrap ESG server of the visited SP through interaction, which is adaptable to the scenarios of visiting through interaction.

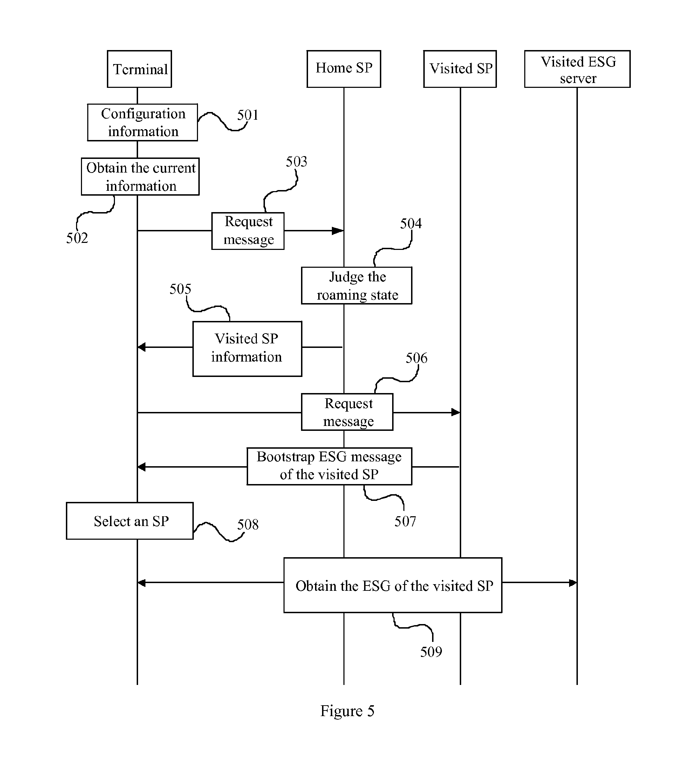

Figure 5 is a signaling flowchart of the method for finding a visited SP in the second embodiment of the present invention. The method includes the following steps:

Step 501: The terminal presets information about the home SP.

The information about the home SP may be: an identifier of the IP platform where the home SP is located, identifier of the home SP, and URL of the bootstrap ESG server of the home SP; or identifier of the home SP, and URL of the bootstrap ESG server of the home SP; or URL of the bootstrap ESG server of the home SP.

As required, the information about the home SP may further include: original network ID of the home SP, and network ID.

A bootstrap ESG includes the information about the ESG provider and the visit information of the ESG. The bootstrap ESG server is a network function entity of the SP, and may exist independently or may be integrated with other network entities. The bootstrap ESG server is generally adapted to store and manage the information about the home SP and the information about the visited SP that signs a roaming agreement with the home SP. The information about the home SP may be: an identifier of the IP platform where the home SP is located, and identifier of the home SP; or identifier of the home SP. The information about the visited SP may be: an identifier of the IP platform where the visited SP is located, identifier of the visited SP, and URL of the bootstrap ESG server of the visited SP; or identifier of the visited SP, and URL of the bootstrap ESG server of the visited SP; or identifier of the IP platform where the visited SP is located, and identifier of the visited SP.

Step 502: The terminal obtains the current network information.

The terminal accesses the current DVB-H network, receives the NIT_actual in the TS, resolves the linkage_descriptor in it, and obtains the identifier of the IP platform.

At this time, the current original network ID and the network ID may also be obtained as required.

Step 503: The terminal sends a request message to the home SP.

Through a preset URL of the bootstrap ESG server of the home SP, the terminal sends a request message to the bootstrap ESG server of the home SP. Depending on the actual conditions, the request message may include: request type, current network information of the terminal, and identifier of the home SP; or request type, current network information of the terminal, identifier of the home SP, and identifier of the IP platform where the home SP is located.

Step 504: The home SP judges whether the terminal that sends the request is roaming. If the terminal is roaming, the process proceeds to step 505; otherwise, the process proceeds to the non-roaming processing.

The bootstrap ESG server of the home SP compares the current network information in the request message from the terminal with the home SP information of the terminal stored in the bootstrap ESG server to judge whether the terminal is roaming. If the current network information includes no content that matches the home SP information of the terminal, the terminal is roaming; otherwise, the terminal is not roaming.

If the current network information from the terminal includes the identifier of the IP platform, the IP platform identifier may be compared first. If the current network information includes no IP platform identifier that matches the identifier of the IP platform where the home SP of the terminal is located, the terminal is roaming, and it is not necessary to further compare the SP information under each IP platform. If the current network information includes the IP platform identifier that matches the identifier of the IP platform where the home SP of the terminal is located, when the service scope of the IP platform is consistent with that of the SP, the terminal is not roaming, and it is not necessary to further compare the SP information under each IP platform; when the service scope of the IP platform is different from that of the SP, it is necessary to further compare the SP identifier under the IP platform to check whether there exists the information that matches the home SP identifier of the terminal. If no such information exists, the terminal is roaming; otherwise, the terminal is not roaming.

If the current network information from the terminal includes no IP platform identifier, it is necessary to compare all SP information included in the received current network information to check whether there exists the information that matches the home SP identifier of the terminal. If no such information exists, the terminal is roaming; otherwise, the terminal is not roaming.

If the obtained message includes the original network ID and the network ID, the original network ID and the network ID information may also be compared.

Step 505: The home SP searches out the information about the visited SP that signs a roaming agreement with the home SP among the current network information of the terminal, and sends the information about the visited SP that signs a roaming agreement with the home SP to the terminal.

After determining that the terminal is roaming through the request message, the bootstrap ESG server of the home SP searches out the information about the visited SP that signs a roaming agreement with the home SP among the current network information of the terminal, and sends the information about the visited SP that signs a roaming agreement with the home SP to the terminal. The information about the visited SP may be: an identifier of the IP platform where the visited SP is located, identifier of the visited SP, and URL of the bootstrap ESG server of the visited SP; or identifier of the visited SP, and URL of the bootstrap ESG server of the visited SP; or identifier of the IP platform where the visited SP is located, and identifier of the visited SP; or identifier of the visited SP.

After obtaining the information about the visited SP, the terminal proceeds with the subsequent process to accept the service of the visited SP.

Step 506: The terminal sends a request message to the bootstrap ESG server of the visited SP, requesting the bootstrap ESG of the visited SP.

The terminal may receive the bootstrap ESG of the visited SP through interaction or broadcast. If the visited SP information returned by the bootstrap ESG server of the home SP includes the URL of the bootstrap ESG server of the visited SP, the terminal may request the bootstrap ESG of the visited SP from the bootstrap ESG server of the visited SP through interaction according to the URL of the bootstrap ESG server of the visited SP.

When the terminal receives the bootstrap ESG of the visited SP through interaction, the terminal sends a request message to the bootstrap ESG server of the visited SP according to the URL of the bootstrap ESG server of the visited SP, requesting the bootstrap ESG of the visited SP. The request message includes a request type.

Step 507: The terminal receives the bootstrap ESG of the visited SP.

After the terminal receives the bootstrap ESG of the visited SP through interaction, the bootstrap ESG server of the visited SP sends the bootstrap ESG of the visited SP to the terminal according to the received request message, and the terminal obtains the bootstrap ESG of the visited SP.

After the terminal receives the bootstrap ESG of the visited SP through broadcast, the bootstrap ESG server of the visited SP broadcasts the bootstrap ESG of the visited SP, and the terminal receives the bootstrap ESG of the visited SP broadcast by the bootstrap ESG server according to the known address specified in the protocol, thus obtaining the bootstrap ESG of the visited SP, without performing step 506 in Figure 5.

Step 508: According to the received information (which is described in the bootstrap ESG of the visited SP) about the visited SP that signs a roaming agreement with the home SP, the terminal obtains the visit information of the ESG of the visited SP. If multiple SPs exist, one SP is selected from them.

Step 509: According to the visit information of the ESG, the terminal obtains the ESG of the visited SP from the ESG server of the visited SP, and displays the ESG to the user.

The mode of the terminal obtaining the ESG of the visited SP from the ESG server of the visited SP is interaction or broadcast.

If the interaction mode is applied, the terminal sends a request message to the ESG server of the visited SP according to the visit information of the ESG. After receiving the message, the ESG server of the visited SP sends the ESG of the visited SP to the terminal.

If the broadcast mode is applied, the ESG server of the visited SP broadcasts the information that includes the ESG of the visited SP, and the terminal receives the ESG of the visited SP according to the visit information of the ESG.

The user accepts the multimedia service of the visited SP through the ESG of the visited SP.

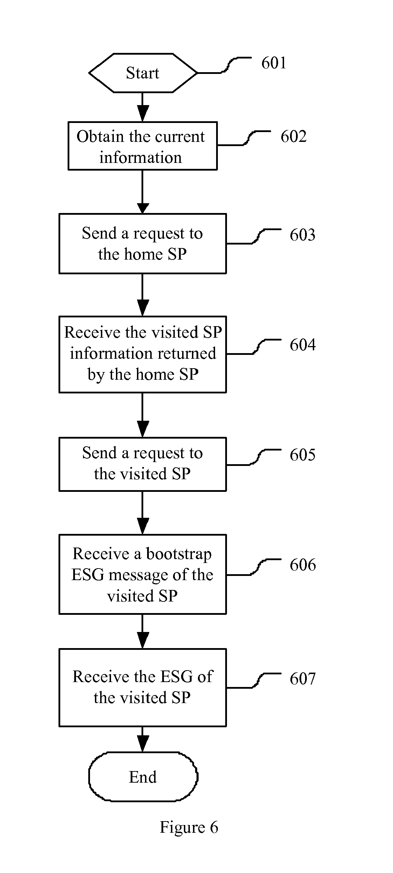

The foregoing text describes the signaling process of the method for finding a visited SP in the second embodiment of the present invention. From the perspective of the terminal, the process of the method for finding a visited SP in the second embodiment of the present invention is shown in Figure 6, and includes the following steps:

Step 601: The terminal starts the multimedia service.

Before this step, the home SP information needs to be preset on the terminal. The home SP information may be: an identifier of the IP platform where the SP is located, identifier of the home SP, and URL of the bootstrap ESG server of the home SP; or identifier of the home SP, and URL of the bootstrap ESG server of the home SP.

Step 602: The terminal obtains the current network information.

The terminal accesses the current DVB-H network, receives the NIT_actual in the TS, resolves the linkage_descriptor in it, and obtains the current network information.

At this time, the current original network ID and the network ID may also be obtained as required.

Step 603: The terminal sends a request message to the home SP.

Through a preset URL of the bootstrap ESG server of the home SP, the terminal sends a request message to the bootstrap ESG server of the home SP. Depending on the actual conditions, the request message may include: request type, current network information of the terminal, and identifier of the home SP; or request type, current network information of the terminal, identifier of the home SP, and identifier of the IP platform where the home SP is located.

The bootstrap ESG server of the home SP compares the current network information in the request message from the terminal with the home SP information of the terminal stored in the bootstrap ESG server to judge whether the terminal is roaming. If the current network information includes no content that matches the home SP information of the terminal, the terminal is roaming; otherwise, the terminal is not roaming.

After determining that the terminal is roaming through the request message, the bootstrap ESG server of the home SP searches out the information about the visited SP that signs a roaming agreement with the home SP among the current network information of the terminal, and sends the information about the visited SP that signs a roaming agreement with the home SP to the terminal. The information about the visited SP may be: an identifier of the IP platform where the visited SP is located, identifier of the visited SP, and URL of the bootstrap ESG server of the visited SP; or identifier of the visited SP, and URL of the bootstrap ESG server of the visited SP; or identifier of the IP platform where the visited SP is located, and identifier of the visited SP; or identifier of the visited SP.

If the obtained message includes the original network ID and the network ID, the original network ID and the network ID information may also be compared.

Step 604: The terminal receives the visited SP information returned by the home SP.

After obtaining the information about the visited SP, the terminal proceeds with the subsequent process to accept the service of the visited SP.

Step 605: The terminal sends a request message to the bootstrap ESG server of the visited SP, requesting the bootstrap ESG of the visited SP.

The terminal may receive the bootstrap ESG of the visited SP through interaction or broadcast. If the visited SP information returned by the bootstrap ESG server of the home SP includes the URL of the bootstrap ESG server of the visited SP, the terminal may request the bootstrap ESG of the visited SP from the bootstrap ESG server of the visited SP through interaction according to the URL of the bootstrap ESG server of the visited SP.

When the terminal receives the bootstrap ESG of the visited SP through interaction, the terminal sends a request message to the bootstrap ESG server of the visited SP according to the URL of the bootstrap ESG server of the visited SP, requesting the bootstrap ESG of the visited SP. The request message includes a request type.

Step 606: The terminal receives the bootstrap ESG of the visited SP.

After the terminal receives the bootstrap ESG of the visited SP through interaction, the bootstrap ESG server of the visited SP sends the bootstrap ESG of the visited SP to the terminal according to the received request message, and the terminal obtains the bootstrap ESG of the visited SP.

After the terminal receives the bootstrap ESG of the visited SP through broadcast, the bootstrap ESG server of the visited SP broadcasts the bootstrap ESG of the visited SP, and the terminal receives the bootstrap ESG of the visited SP broadcast by the bootstrap ESG server according to the known address specified in the protocol, thus obtaining the bootstrap ESG of the visited SP, without performing step 605 in Figure 6.

Step 607: According to the received information (which is described in the bootstrap ESG of the visited SP) about the visited SP that signs a roaming agreement with the home SP, the terminal obtains the visit information of the ESG of the visited SP. If multiple SPs exist, one SP is selected from them.

According to the visit information of the ESG, the terminal obtains the ESG of the visited SP from the ESG server of the visited SP, and displays the ESG to the user.

The mode of the terminal obtaining the ESG of the visited SP from the ESG server of the visited SP is interaction or broadcast.

If the interaction mode is applied, the terminal sends a request message to the ESG server of the visited SP according to the visit information of the ESG. After receiving the message, the ESG server of the visited SP sends the ESG of the visited SP to the terminal.

If the broadcast mode is applied, the ESG server of the visited SP broadcasts the information that includes the ESG of the visited SP, and the terminal receives the ESG of the visited SP according to the visit information of the ESG.

The user accepts the multimedia service of the visited SP through the ESG of the visited SP.

The process is ended.

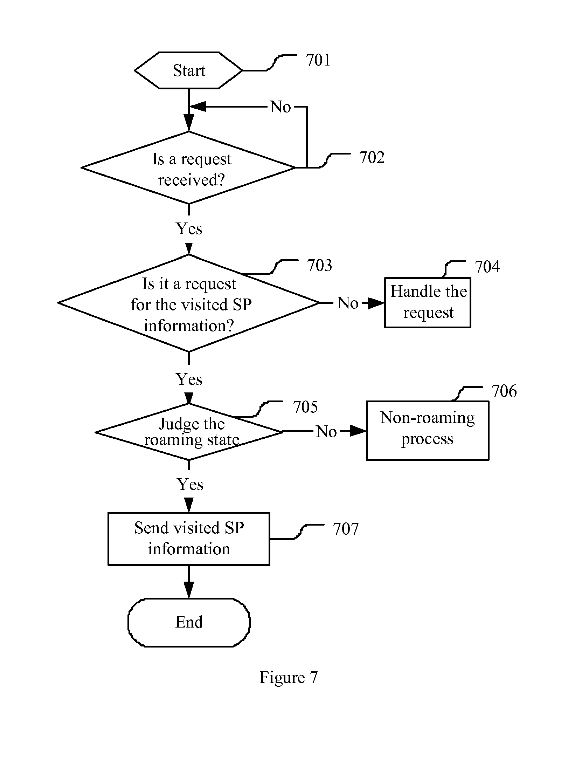

Figure 7 is a flowchart of the method for finding a visited SP in the second embodiment of the present invention. The method includes the following steps:

Step 701: The bootstrap ESG server of the SP starts working.

Each SP may be a home SP of a terminal. The bootstrap ESG server of each SP may store the information about the home SP and the information about the SP that signs a roaming agreement with the home SP, and manages such information. The information about the SP may be: an identifier of the IP platform where the SP is located, and identifier of the SP; or identifier of the SP. The information about the SP that signs a roaming agreement with the home SP may be: an identifier of the IP platform that includes the SP that signs a roaming agreement with the home SP, identifier of the SP that signs a roaming agreement with the home SP, and URL of the bootstrap ESG server of the SP that signs a roaming agreement with the home SP; or identifier of the SP that signs a roaming agreement with the home SP, and URL of the bootstrap ESG server of the SP that signs a roaming agreement with the home SP; or identifier of the IP platform that includes the SP that signs a roaming agreement with the home SP, and identifier of the SP that signs a roaming agreement with the home SP.

Step 702: The bootstrap ESG server of the SP judges whether a request message is received from the terminal. If a request message is received, the process proceeds to step 703; otherwise, the process returns to step 702 to continue waiting for the request message.

Step 703: The bootstrap ESG server of the SP judges whether the request message is a request for the visited SP information. If it is a request for the visited SP information, the process proceeds to step 705; otherwise, the process returns to step 704 to handle the request.

According to the request type in the request message sent from the terminal, the bootstrap ESG server of the home SP judges whether the request message is a request for the visited SP information.

Step 705: The home SP judges whether the terminal that sends the request is roaming. If the terminal is roaming, the process proceeds to step 707; otherwise, the process proceeds to step 706 to perform the non-roaming processing.

If the process proceeds to step 705, the request message sent by the terminal is a request for the visited SP information. The request message includes: request type, current network information of the terminal, identifier of the home SP; or request type, current network information of the terminal, identifier of the home SP, identifier of the IP platform where the home SP is located, and bootstrap ESG of the home SP.

The bootstrap ESG server of the home SP compares the current network information in the request message from the terminal with the home SP information of the terminal stored in the bootstrap ESG server to judge whether the terminal is roaming. If the current network information includes no content that matches the home SP information of the terminal, the terminal is roaming; otherwise, the terminal is not roaming.

If the current network information from the terminal includes the identifier of the IP platform, the IP platform identifier may be compared first. If the current network information includes no IP platform identifier that matches the identifier of the IP platform where the home SP of the terminal is located, the terminal is roaming, and it is not necessary to further compare the SP information under each IP platform. If the current network information includes the IP platform identifier that matches the identifier of the IP platform where the home SP of the terminal is located, when the service scope of the IP platform is consistent with that of the SP, the terminal is not roaming, and it is not necessary to further compare the SP information under each IP platform; when the service scope of the IP platform is different from that of the SP, it is necessary to further compare the SP identifier under the IP platform to check whether there exists the information that matches the home SP identifier of the terminal. If no such information exists, the terminal is roaming; otherwise, the terminal is not roaming.

If the current network information from the terminal includes no IP platform identifier, it is necessary to compare all SP information included in the received current network information to check whether there exists the information that matches the home SP identifier of the terminal. If no such information exists, the terminal is roaming; otherwise, the terminal is not roaming.

Step 707: The visited SP information is sent to the terminal.

According to the information about the SP that covers the bootstrap ESG server and the information about the SP that signs a roaming agreement with the former SP saved in the bootstrap ESG server, the bootstrap ESG server of the SP searches out the information about the SP that signs a roaming agreement with the SP that covers the bootstrap ESG server among the SP information included in the current network information of the terminal in the request message, and sends it as the visited SP information of the terminal to the terminal.

The information about the visited SP may be: an identifier of the IP platform where the visited SP is located, identifier of the visited SP, and URL of the bootstrap ESG server of the visited SP; or identifier of the visited SP, and URL of the bootstrap ESG server of the visited SP; or identifier of the IP platform where the visited SP is located, and identifier of the visited SP.

The process is ended.

The foregoing technical solution shows that in the method for finding a visited SP in the second embodiment of the present invention, the terminal only needs to configure the information about the home SP of the terminal, rather than configure both the information about the home SP of the terminal and the information about the non-home SP that signs an agreement with the home SP. The home SP of each terminal is generally fixed and seldom changes. Generally, the terminal does not need to change the home SP information of the terminal once such information is configured. Such information may be input by the user, or written by the operator when the terminal is put into use, or written in other ways. The writing mode is flexible, without participation of the home presetting server. Therefore, the terminal does not need to support specific specifications, and the technical solution may be implemented on any terminal that supports any specifications.

Besides, it is not necessary to compare all SP information in the terminal one by one; the operations of judging the roaming state and searching are performed by the bootstrap ESG server of the home SP, and therefore, the workload of the terminal is reduced drastically.

Further, the method for finding a visited SP in the second embodiment of the present invention provides a mode of visiting the bootstrap ESG server of the visited SP through interaction, which is adaptable to the scenarios of visiting through interaction.

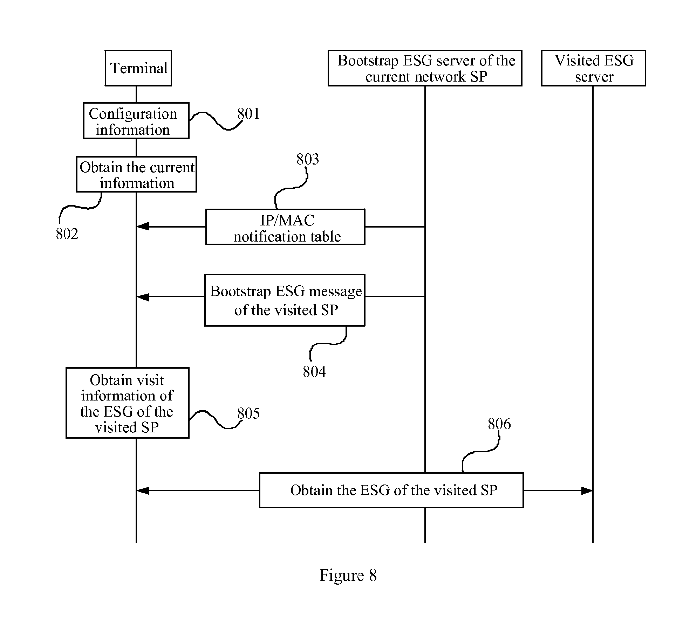

Figure 8 is a signaling flowchart of the method for finding a visited SP in the third embodiment of the present invention. The method includes the following steps:

Step 801: The terminal presets information about the home SP.

Many IP platforms may exist in an area and each IP platform may have multiple SPs. Among the SPs, some SPs are differentiated from other SPs only through the SP identifier, and some SPs are differentiated from other SPs through both the identifier of the IP platform of the SP and the identifier of the SP. Therefore, the information about the home SP may be: an identifier of the IP platform where the home SP is located, and identifier of the home SP; or identifier of the home SP.

Step 802: The terminal obtains the current network information, which includes the IP platform identifier of the current network.

The terminal accesses the current DVB-H network, receives the NIT_actual in the TS, resolves the linkage_descriptor in it, and obtains the IP platform identifier of the current network.

At this time, the current original network ID and the network ID may also be obtained as required.

Step 803: According to the IP platform identifier, the terminal receives the IP/Media Access Control (IP/MAC) Notification Table (INT) of the IP platform from the bootstrap ESG server of the SP in the current network.

Step 804: The terminal receives the bootstrap ESG from the bootstrap ESG server of the SP in the current network.

In the INT, the terminal finds the ES stream that transmits the bootstrap ESG according to the IP address and the port registered at the bootstrap ESG in the Internet Assigned Number Authority (IANA), and receives the bootstrap ESG of the IP platform where the visited SP is located.

Step 805: The terminal searches out the visit information of the ESG of the visited SP.

The bootstrap ESG describes the SP information of the current network, and information about the SP that signs a roaming agreement with each SP. The information about the SP that signs a roaming agreement with the visited SP of the terminal needs to include the home SP information of the terminal. Therefore, the terminal may search for the SP information of the current network descried in the bootstrap ESG and the information about the SP that signs a roaming agreement with the SP in the current network to check whether there exists the information that matches the home SP information configured in the terminal. If any matching SP information is found in the current network, the terminal is not roaming, and the terminal goes to the non-roaming processing; if any matching information about the SP that signs a roaming agreement with the SP in the current network is found, the SP in the current network has signed a roaming agreement with the home SP of the terminal and may become a visited SP of the terminal, and the terminal obtains the visit information of the ESG of the visited SP from the visited SP.

Step 806: According to the visit information of the ESG, the terminal obtains the ESG of the visited SP from the ESG server of the visited SP, and displays the ESG to the user.

The mode of the terminal obtaining the ESG of the visited SP from the ESG server of the visited SP is interaction or broadcast.

If the interaction mode is applied, the terminal sends a request message to the ESG server of the visited SP according to the visit information of the ESG. After receiving the message, the ESG server of the visited SP sends the ESG of the visited SP to the terminal.

If the broadcast mode is applied, the ESG server of the visited SP broadcasts the information that includes the ESG of the visited SP, and the terminal receives the ESG of the visited SP according to the visit information of the ESG.

The user accepts the multimedia service of the visited SP through the ESG of the visited SP.

The foregoing technical solution shows that in the method for finding a visited SP in the third embodiment of the present invention, the terminal only needs to configure the information about the home SP of the terminal, rather than configure both the information about the home SP of the terminal and the information about the non-home SP that signs an agreement with the home SP. The home SP of each terminal is generally fixed and seldom changes. Generally, the terminal does not need to change the home SP information of the terminal once such information is configured. Such information may be input by the user, or written by the operator when the terminal is put into use, or written in other ways. The writing mode is flexible, without participation of the home presetting server. Therefore, the terminal does not need to support specific specifications, and the technical solution may be implemented on any terminal that supports any specifications.

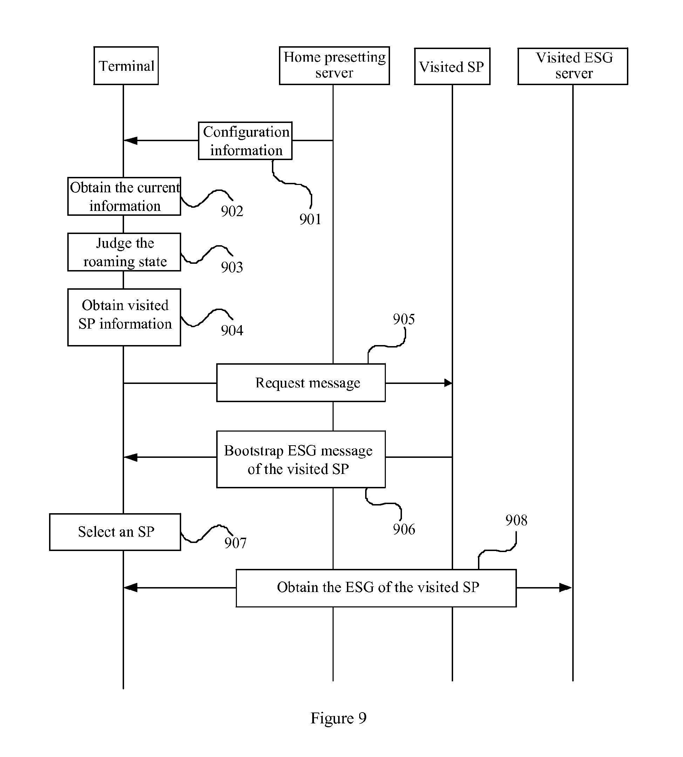

Figure 9 is a signaling flowchart of the method for finding a visited SP in the fourth embodiment of the present invention. The method includes the following steps:

Step 901: The home SP information and the information about the SP that signs a roaming agreement with the home SP are configured on the terminal, in which the information about the visited SP needs to include the identifier of the IP platform where the visited SP is located.

Depending on the actual conditions, the information about the home SP may be: an identifier of the IP platform where the home SP is located, identifier of the home SP, and URL of the bootstrap ESG server of the home SP; or identifier of the IP platform where the home SP is located, and identifier of the home SP. The information about the visited SP may be: an identifier of the IP platform where the visited SP is located, identifier of the visited SP, and URL of the bootstrap ESG server of the visited SP; or identifier of the IP platform where the visited SP is located, and identifier of the visited SP.

Step 902: The terminal obtains the current network information, which includes the IP platform identifier of the current network.

The terminal accesses the current DVB-H network, receives the NIT_actual in the TS, resolves the linkage_descriptor in it, and obtains the IP platform identifier of the current network.

At this time, the current original network ID and the network ID may also be obtained as required.

Step 903: Through comparison, the terminal judges whether it is roaming. If the terminal is roaming, the process proceeds to step 904; otherwise, the process proceeds to the non-roaming process.

The terminal compares the current network information with the home SP information configured in the terminal, and judges whether the terminal is roaming. If the current network information includes no content that matches the home SP information preset in the terminal, the terminal is roaming; otherwise, the terminal is not roaming.

During the comparison, the IP platform identifier may be compared first. If the current network information includes no IP platform identifier that matches the identifier (which is preset in the terminal) of the IP platform where the home SP is located, the terminal is roaming, and it is not necessary to further compare the SP information under each IP platform. If the current network information includes the IP platform identifier that matches the identifier (which is preset in the terminal) of the IP platform where the home SP is located, when the service scope of the IP platform is consistent with that of the SP, the terminal is not roaming, and it is not necessary to further compare the SP information under each IP platform; when the service scope of the IP platform is different from that of the SP, the original network ID and the network ID may be further compared to check whether there exists the information that matches the original network ID and the network ID (which are preset in the terminal) of the home SP. If no such information exists, the terminal is roaming; otherwise, the terminal is not roaming.

Step 904: The terminal searches out the information about the visited SP.

Through the IP platform identifier of the current network, the terminal searches for the information (which is configured in the terminal) about the visited SP that signs a roaming agreement with the home SP, and finds the information (which matches the IP platform identifier of the current network) about the visited SP that signs a roaming agreement with the home SP.

The information about the visited SP may be: an identifier of the IP platform where the visited SP is located, identifier of the visited SP, and URL of the bootstrap ESG server of the visited SP; or identifier of the IP platform where the visited SP is located, and identifier of the visited SP; or identifier of the visited SP, and URL of the bootstrap ESG server of the visited SP.

Step 905: The terminal sends a request message to the bootstrap ESG server of the visited SP, requesting the bootstrap ESG of the visited SP.

The terminal may receive the bootstrap ESG of the visited SP through interaction or broadcast. If the visited SP information includes the URL of the bootstrap ESG server of the visited SP, the terminal may request the bootstrap ESG of the visited SP from the bootstrap ESG server of the visited SP through interaction according to the URL of the bootstrap ESG server of the visited SP.

When the terminal receives the bootstrap ESG of the visited SP through interaction, the terminal sends a request message to the bootstrap ESG server of the visited SP according to the URL of the bootstrap ESG server of the visited SP, requesting the bootstrap ESG of the visited SP. The request message includes a request type.

Step 906: The terminal receives the bootstrap ESG of the visited SP.

After the terminal receives the bootstrap ESG of the visited SP through interaction, the bootstrap ESG server of the visited SP sends the bootstrap ESG of the visited SP to the terminal according to the received request message, and the terminal obtains the bootstrap ESG of the visited SP.

After the terminal receives the bootstrap ESG of the visited SP through broadcast, the bootstrap ESG server of the visited SP broadcasts the bootstrap ESG of the visited SP, and the terminal receives the bootstrap ESG of the visited SP broadcast by the bootstrap ESG server according to the known address specified in the protocol, thus obtaining the bootstrap ESG of the visited SP, without performing step 905 in Figure 9.

Step 907: According to the received information (which is described in the bootstrap ESG of the visited SP) about the visited SP that signs a roaming agreement with the home SP, the terminal obtains the visit information of the ESG of the visited SP. If multiple SPs exist, one SP is selected from them.

Step 908: According to the visit information of the ESG, the terminal obtains the ESG of the visited SP from the ESG server of the visited SP, and displays the ESG to the user.

The mode of the terminal obtaining the ESG of the visited SP from the ESG server of the visited SP is interaction or broadcast.

If the interaction mode is applied, the terminal sends a request message to the ESG server of the visited SP according to the visit information of the ESG. After receiving the message, the ESG server of the visited SP sends the ESG of the visited SP to the terminal.

If the broadcast mode is applied, the ESG server of the visited SP broadcasts the information that includes the ESG of the visited SP, and the terminal receives the ESG of the visited SP according to the visit information of the ESG.

The user accepts the multimedia service of the visited SP through the ESG of the visited SP.

As described above, in the method for finding a visited SP in the fourth embodiment of the present invention, if the home SP information configured in the terminal includes the identifier of the IP platform where the home SP is located, it is appropriate to compare the IP platform identifier first. In most cases, the IP platform identifier is enough for judging whether the terminal is roaming or not, without the need of comparing all SP information one by one. In the process of searching for the information about the visited SP, the information about the visited SP is obtained only by comparing the IP platform identifier, and therefore, the workload of the terminal is reduced drastically.

Further still, the method for finding a visited SP in the fourth embodiment of the present invention provides a mode of visiting the bootstrap ESG server of the visited SP through interaction, which is adaptable to the scenarios of visiting through interaction.

In the foregoing embodiment, the functions provided by the bootstrap ESG server of the home SP may also be implemented through the discovery server of the home SP. The discovery server is a function module for storing the information about the home SP and the information about the SP that signs a roaming agreement with the home SP in an embodiment of the present invention, and is located in the home SP.

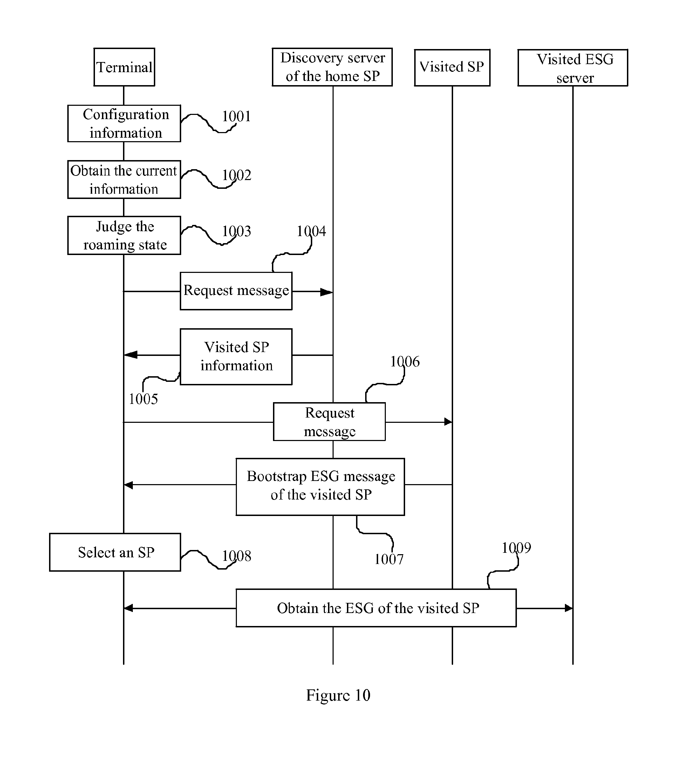

Figure 10 is a signaling flowchart of the method for finding a visited SP in the fifth embodiment of the present invention. The method includes the following steps:
Step 1001: The terminal presets information about the home SP.

Many IP platforms may exist in an area and each IP platform may have multiple SPs. Among the SPs, some SPs are differentiated from other SPs only through the SP identifier, and some SPs are differentiated from other SPs through both the identifier of the IP platform of the SP and the identifier of the SP. Meanwhile, in order for the terminal to access the discovery server of the home SP, it is also necessary to preset the URL of the discovery server of the home SP. Therefore, the information about the home SP may be an identifier of the IP platform where the home SP is located, identifier of the home SP, and URL of the discovery server of the home SP.

As required, the information about the home SP may further include: original network ID of the home SP, and network ID.

Step 1002: The terminal obtains the current network information.

The terminal accesses the current DVB-H network, receives the NIT_actual in the TS, resolves the linkage_descriptor in it, and obtains the identifier of the IP platform, and so on.

At this time, the current original network ID and the network ID may also be obtained as required.

Step 1003: The terminal judges whether it is roaming. If the terminal is roaming, the process proceeds to step 1004; otherwise, the process proceeds to the non-roaming processing.

The terminal compares the current network information with the home SP information configured in the terminal, and judges whether the terminal is roaming. If the current network information includes no content that matches the home SP information preset in the terminal, the terminal is roaming; otherwise, the terminal is not roaming.

If the home SP information configured in the terminal includes the identifier of the IP platform where the home SP is located, the IP platform identifier may be compared first. If the current network information includes no IP platform identifier that matches the identifier (which is preset in the terminal) of the IP platform where the home SP is located, the terminal is roaming, and it is not necessary to further compare the SP information under each IP platform. If the current network information includes the IP platform identifier that matches the identifier (which is preset in the terminal) of the IP platform where the home SP is located, when the service scope of the IP platform is consistent with that of the SP, the terminal is not roaming, and it is not necessary to further compare the SP information under each IP platform; when the service scope of the IP platform is different from that of the SP, the original network ID and the network ID may be further compared to check whether there exists the information that matches the original network ID and the network ID (which are preset in the terminal) of the home SP. If no such information exists, the terminal is roaming; otherwise, the terminal is not roaming.

Step 1004: The terminal sends a request message to the home SP, requesting the information about the visited SP that signs a roaming agreement with the home SP.

Through the preset URL of the discovery server of the home SP, the terminal sends a request message to the discovery server of the home SP, requesting the information about the visited SP that signs a roaming agreement with the home SP. This request message includes: current network information of the terminal, and identifier of the home SP; or current network information of the terminal, identifier of the home SP, and identifier of the IP platform where the home SP is located.

Step 1005: After receiving the request message, the home SP searches out the information about the visited SP that signs a roaming agreement with the home SP among the current network information of the terminal, and sends the information about the visited SP that signs a roaming agreement with the home SP to the terminal.

After receiving the request message, the discovery server of the home SP searches out the information about the visited SP among the current network information according to the stored information about the visited SP that signs a roaming agreement with the home SP, and sends the information about the visited SP that signs a roaming agreement with the home SP to the terminal. The information about the visited SP may be: an identifier of the IP platform where the visited SP is located, identifier of the visited SP, and URL of the bootstrap ESG server of the visited SP; or identifier of the visited SP, and URL of the bootstrap ESG server of the visited SP; or identifier of the IP platform where the visited SP is located, and identifier of the visited SP; or identifier of the visited SP.

After obtaining the information about the visited SP, the terminal proceeds with the subsequent process to accept the service of the visited SP.

Step 1006: The terminal sends a request message to the bootstrap ESG server of the visited SP, requesting the bootstrap ESG of the visited SP.

The terminal may receive the bootstrap ESG of the visited SP through interaction or broadcast. If the visited SP information returned by the discovery server of the home SP includes the URL of the bootstrap ESG server of the visited SP, the terminal may request the bootstrap ESG of the visited SP from the bootstrap ESG server of the visited SP through interaction according to the URL of the bootstrap ESG server of the visited SP.

When the terminal receives the bootstrap ESG of the visited SP through interaction, the terminal sends a request message to the bootstrap ESG server of the visited SP according to the URL of the bootstrap ESG server of the visited SP, requesting the bootstrap ESG of the visited SP. The request message includes a request type.

Step 1007: The terminal receives the bootstrap ESG of the visited SP.

After the terminal receives the bootstrap ESG of the visited SP through interaction, the bootstrap ESG server of the visited SP sends the bootstrap ESG of the visited SP to the terminal according to the received request message, and the terminal obtains the bootstrap ESG of the visited SP.

After the terminal receives the bootstrap ESG of the visited SP through broadcast, the bootstrap ESG server of the visited SP broadcasts the bootstrap ESG of the visited SP, and the terminal receives the bootstrap ESG of the visited SP broadcast by the bootstrap ESG server according to the known address specified in the protocol, thus obtaining the bootstrap ESG of the visited SP, without performing step 1006 in Figure 10.

Step 1008: According to the received information (which is described in the bootstrap ESG of the visited SP) about the visited SP that signs a roaming agreement with the home SP, the terminal obtains the visit information of the ESG of the visited SP. If multiple SPs exist, one SP is selected from them.

Step 1009: According to the visit information of the ERG, the terminal obtains the ESG of the visited SP from the ESG server of the visited SP, and displays the ESG to the user.

The mode of the terminal obtaining the ESG of the visited SP from the ESG server of the visited SP is interaction or broadcast.

If the interaction mode is applied, the terminal sends a request message to the ESG server of the visited SP according to the visit information of the ESG. After receiving the message, the ESG server of the visited SP sends the ESG of the visited SP to the terminal.

If the broadcast mode is applied, the ESG server of the visited SP broadcasts the information that includes the ESG of the visited SP, and the terminal receives the ESG of the visited SP according to the visit information of the ESG.

The user accepts the multimedia service of the visited SP through the ESG of the visited SP.

The foregoing technical solution shows that in the method for finding a visited SP in the fifth embodiment of the present invention, the terminal only needs to configure the information about the home SP of the terminal, rather than configure both the information about the home SP of the terminal and the information about the non-home SP that signs an agreement with the home SP. The home SP of each terminal is generally fixed and seldom changes. Generally, the terminal does not need to change the home SP information of the terminal once such information is configured. Such information may be input by the user, or written by the operator when the terminal is put into use, or written in other ways. The writing mode is flexible, without participation of the home presetting server. Therefore, the terminal does not need to support specific specifications, and the technical solution may be implemented on any terminal that supports any specifications.

Meanwhile, if the home SP information configured in the terminal includes the identifier of the IP platform where the home SP is located, it is appropriate to compare the IP platform identifier first. In most cases, the IP platform identifier is enough for judging whether the terminal is roaming or not, without the need of comparing all SP information one by one. The subsequent search is performed by the discovery server of the SP, and therefore, the workload of the terminal is reduced drastically.

Further, the method for finding a visited SP in the fifth embodiment of the present invention provides a mode of visiting the bootstrap ESG server of the visited SP through interaction, which is adaptable to the scenarios of visiting through interaction.

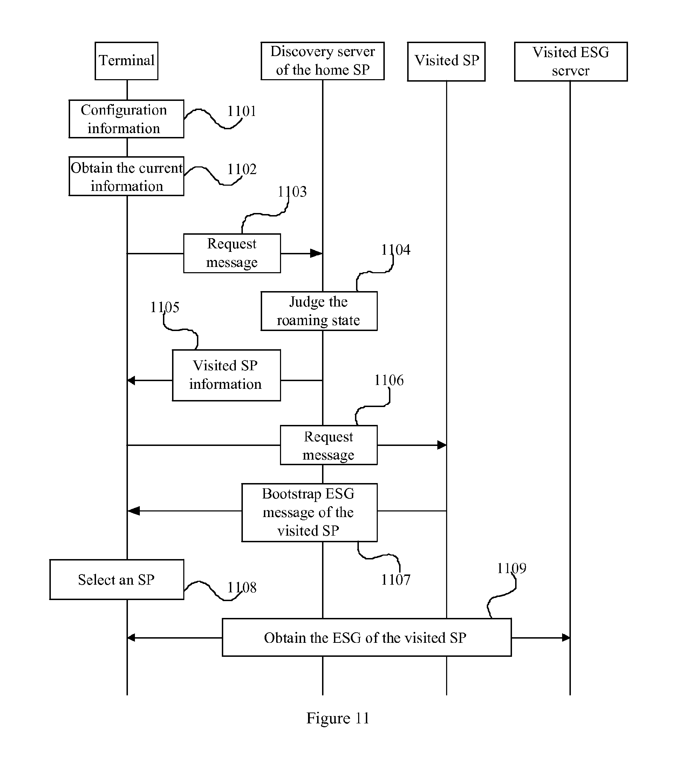

Figure 11 is a signaling flowchart of the method for finding a visited SP in the sixth embodiment of the present invention. The method includes the following steps:

Step 1101: The terminal presets information about the home SP.

The information about the home SP may be: an identifier of the IP platform where the home SP is located, identifier of the home SP, and URL of the discovery server of the home SP; or identifier of the home SP, and URL of the discovery server of the home SP; or URL of the discovery server of the home SP.

Step 1102: The terminal obtains the current network information.

The terminal accesses the current DVB-H network, receives the NIT_actual in the TS, resolves the linkage_descriptor in it, and obtains the identifier of the IP platform.

At this time, the current original network ID and the network ID may also be obtained as required.

Step 1103: The terminal sends a request message to the home SP.

Through a preset URL of the discovery server of the home SP, the terminal sends a request message to the discovery server of the home SP. Depending on the actual conditions, the request message may include: current network information of the terminal, and identifier of the home SP; or current network information of the terminal, identifier of the home SP, and identifier of the IP platform where the home SP is located.

Step 1104: The home SP judges whether the terminal that sends the request is roaming. If the terminal is roaming, the process proceeds to step 505; otherwise, the process proceeds to the non-roaming processing.

The discovery server of the home SP compares the current network information in the request message from the terminal with the home SP information of the terminal stored in the bootstrap ESG server to judge whether the terminal is roaming. If the current network information includes no content that matches the home SP information of the terminal, the terminal is roaming; otherwise, the terminal is not roaming.

If the current network information from the terminal includes the identifier of the IP platform, the IP platform identifier may be compared first. If the current network information includes no IP platform identifier that matches the identifier of the IP platform where the home SP of the terminal is located, the terminal is roaming, and it is not necessary to further compare the SP information under each IP platform. If the current network information includes the IP platform identifier that matches the identifier of the IP platform where the home SP of the terminal is located, when the service scope of the IP platform is consistent with that of the SP, the terminal is not roaming, and it is not necessary to further compare the SP information under each IP platform; when the service scope of the IP platform is different from that of the SP, it is necessary to further compare the original network ID and the network ID to check whether there exists the information that matches the original network ID and the network ID of the home SP preset in the terminal. If no such information exists, the terminal is roaming; otherwise, the terminal is not roaming.

Step 1105: The home SP searches out the information about the visited SP that signs a roaming agreement with the home SP among the current network information of the terminal, and sends the information about the visited SP that signs a roaming agreement with the home SP to the terminal.

After determining that the terminal is roaming through the request message, the discovery server of the home SP searches out the information about the visited SP among the current network information according to the stored information about the visited SP that signs a roaming agreement with the home SP, and sends the information about the visited SP that signs a roaming agreement with the home SP to the terminal. The information about the visited SP may be: an identifier of the IP platform where the visited SP is located, identifier of the visited SP, and URL of the bootstrap ESG server of the visited SP; or identifier of the visited SP, and URL of the bootstrap ESG server of the visited SP; or identifier of the IP platform where the visited SP is located, and identifier of the visited SP; or identifier of the visited SP.

After obtaining the information about the visited SP, the terminal proceeds with the subsequent process to accept the service of the visited SP.

Step 1106: The terminal sends a request message to the bootstrap ESG server of the visited SP, requesting the bootstrap ESG of the visited SP.

The terminal may receive the bootstrap ESG of the visited SP through interaction or broadcast. If the visited SP information returned by the discovery server of the home SP includes the URL of the bootstrap ESG server of the visited SP, the terminal may request the bootstrap ESG of the visited SP from the bootstrap ESG server of the visited SP through interaction according to the URL of the bootstrap ESG server of the visited SP.

When the terminal receives the bootstrap ESG of the visited SP through interaction, the terminal sends a request message to the bootstrap ESG server of the visited SP according to the URL of the bootstrap ESG server of the visited SP, requesting the bootstrap ESG of the visited SP. The request message includes a request type.

Step 1107: The terminal receives the bootstrap ESG of the visited SP.

After the terminal receives the bootstrap ESG of the visited SP through interaction, the bootstrap ESG server of the visited SP sends the bootstrap ESG of the visited SP to the terminal according to the received request message, and the terminal obtains the bootstrap ESG of the visited SP.

After the terminal receives the bootstrap ESG of the visited SP through broadcast, the bootstrap ESG server of the visited SP broadcasts the bootstrap ESG of the visited SP, and the terminal receives the bootstrap ESG of the visited SP broadcast by the bootstrap ESG server according to the known address specified in the protocol, thus obtaining the bootstrap ESG of the visited SP, without performing step 1106 in Figure 11.

Step 1108: According to the received information (which is described in the bootstrap ESG of the visited SP) about the visited SP that signs a roaming agreement with the home SP, the terminal obtains the visit information of the ESG of the visited SP. If multiple SPs exist, one SP is selected from them.

Step 1109: According to the visit information of the ESG, the terminal obtains the ESG of the visited SP from the ESG server of the visited SP, and displays the ESG to the user.

The mode of the terminal obtaining the ESG of the visited SP from the ESG server of the visited SP is interaction or broadcast.

If the interaction mode is applied, the terminal sends a request message to the ESG server of the visited SP according to the visit information of the ESG. After receiving the message, the ESG server of the visited SP sends the ESG of the visited SP to the terminal.

If the broadcast mode is applied, the ESG server of the visited SP broadcasts the information that includes the ESG of the visited SP, and the terminal receives the ESG of the visited SP according to the visit information of the ESG.

The user accepts the multimedia service of the visited SP through the ESG of the visited SP.

The foregoing technical solution shows that in the method for finding a visited SP in the sixth embodiment of the present invention, the terminal only needs to configure the information about the home SP of the terminal, rather than configure both the information about the home SP of the terminal and the information about the non-home SP that signs an agreement with the home SP. The home SP of each terminal is generally fixed and seldom changes. Generally, the terminal does not need to change the home SP information of the terminal once such information is configured. Such information may be input by the user, or written by the operator when the terminal is put into use, or written in other ways. The writing mode is flexible, without participation of the home presetting server. Therefore, the terminal does not need to support specific specifications, and the technical solution may be implemented on any terminal that supports any specifications.

Besides, it is not necessary to compare all SP information in the terminal one by one; the operations of judging the roaming state and searching are performed by the discovery server of the home SP, and therefore, the workload of the terminal is reduced drastically.

Further, the method for finding a visited SP in the sixth embodiment of the present invention provides a mode of visiting the bootstrap ESG server of the visited SP through interaction, which is adaptable to the scenarios of visiting through interaction.

When the terminal accesses the network, the available current network information may further include an interactive network identifier, for example, Mobile Country Code (MCC), Mobile Network Code (MNC), and Network Subset Code (NSC). Both interactive network identifier and IP platform identifier may be called "network identifier". In this embodiment, in some circumstances, for example, when judging the roaming state, the interactive network identifier may replace the IP platform identifier. The interactive network identifier and the IP platform identifier are applied in similar ways in all embodiments. The method for finding a visited SP in the seventh embodiment is described hereunder by using the scenario of the fifth embodiment of the present invention.

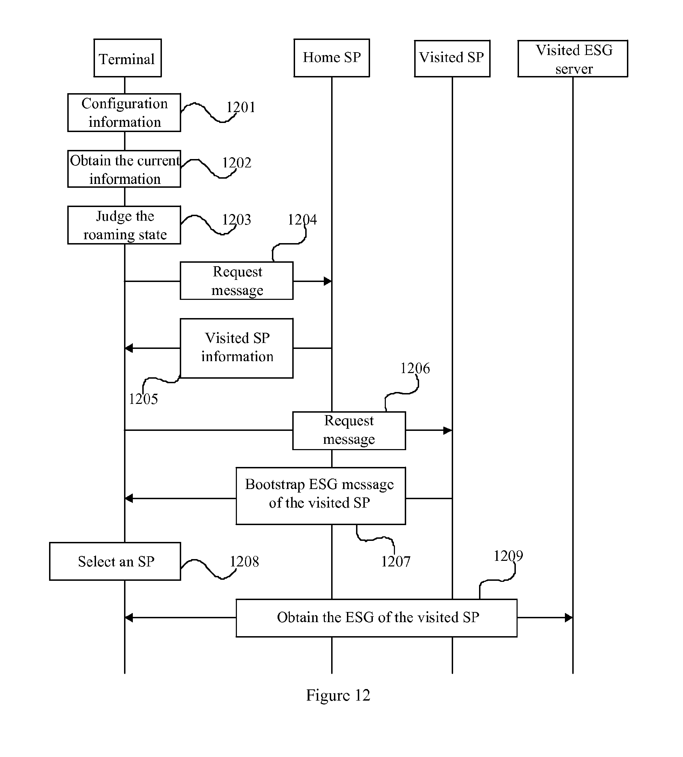

Figure 12 is a signaling flowchart of the method for finding a visited SP in the seventh embodiment of the present invention. The method includes the following steps:

Step 1201: The terminal presets information about the home SP.

Depending on specific conditions, the information about the home SP may be: an identifier of the interactive network where the home SP is located, identifier of the home SP, and URL of the discovery server of the home SP.

The identifier of the interactive network where the home SP is located may be an identifier of the mobile network where the SP is located, for example: MCC and MNC; or MCC, MNC and NSC.

Step 1202: The terminal obtains the current network information.

The terminal accesses the current interactive network, and obtains the current interactive network information, for example, mobile network identifiers MCC and MNC; or MCC, MNC and NSC.

Step 1203: The terminal judges whether it is roaming. If the terminal is roaming, the process proceeds to step 1004; otherwise, the process proceeds to the non-roaming processing.

The terminal compares the current network information with the home SP information configured in the terminal, and judges whether the terminal is roaming. If the current network information includes no content that matches the home SP information preset in the terminal, the terminal is roaming; otherwise, the terminal is not roaming.

When the home SP information configured in the terminal includes the identifier of the interactive network where the home SP is located, the interactive network identifier may be compared first. If the current network information includes no interactive network identifier that matches the identifier (which is preset in the terminal) of the interactive network where the home SP is located, the terminal is roaming; if the current network information includes the interactive network identifier that matches the identifier (which is preset in the terminal) of the interactive network where the home SP is located, the terminal is not roaming.

Step 1204: The terminal sends a request message to the home SP, requesting the information about the visited SP that signs a roaming agreement with the home SP.

Through the preset URL of the discovery server of the home SP, the terminal sends a request message to the discovery server of the home SP, requesting the information about the visited SP that signs a roaming agreement with the home SP. This request message includes: current network information of the terminal, and identifier of the home SP; or current network information of the terminal, identifier of the home SP, and identifier of the interactive network where the home SP is located.

At this time, the terminal may request the DVB-H broadcast network signal parameters of the visited SP as required.

Step 1205: After receiving the request message, the home SP searches out the information about the visited SP that signs a roaming agreement with the home SP among the current network information of the terminal, and sends the information about the visited SP that signs a roaming agreement with the home SP to the terminal.

After receiving the request message, the discovery server of the home SP searches out the information about the visited SP among the current network information according to the stored information about the visited SP that signs a roaming agreement with the home SP, and sends the information about the visited SP that signs a roaming agreement with the home SP to the terminal. The information about the visited SP may be: an identifier of the IP platform where the visited SP is located, identifier of the visited SP, and URL of the bootstrap ESG server of the visited SP; or identifier of the visited SP, and URL of the bootstrap ESG server of the visited SP; or identifier of the IP platform where the visited SP is located, and identifier of the visited SP; or identifier of the visited SP.

After obtaining the information about the visited SP, the terminal proceeds with the subsequent process to accept the service of the visited SP.

If the terminal also requests the DVB-H broadcast network signal parameters of the visited SP, the home SP may also send the DVB-H broadcast network signal parameters of the visited SP to the terminal.

The DVB-H broadcast network signal parameters include: channel bandwidth, central frequency of the channel, frequency deviation, protection interval, OFDM mode, and modulation mode.

After receiving the DVB-H broadcast network signal parameters of the visited SP, the terminal may access the DVB-H broadcast network of the visited SP quickly according to the DVB-H signal parameters when it is necessary to access the DVB-H broadcast network of the visited SP.

Step 1206: The terminal sends a request message to the bootstrap ESG server of the visited SP, requesting the bootstrap ESG of the visited SP.

The terminal may receive the bootstrap ESG of the visited SP through interaction or broadcast. If the visited SP information returned by the discovery server of the home SP includes the URL of the bootstrap ESG server of the visited SP, the terminal may request the bootstrap ESG of the visited SP from the bootstrap ESG server of the visited SP through interaction according to the URL of the bootstrap ESG server of the visited SP.

When the terminal receives the bootstrap ESG of the visited SP through interaction, the terminal sends a request message to the bootstrap ESG server of the visited SP according to the URL of the bootstrap ESG server of the visited SP, requesting the bootstrap ESG of the visited SP. The request message includes a request type.

Step 1207: The terminal receives the bootstrap ESG of the visited SP.

After the terminal receives the bootstrap ESG of the visited SP through interaction, the bootstrap ESG server of the visited SP sends the bootstrap ESG of the visited SP to the terminal according to the received request message, and the terminal obtains the bootstrap ESG of the visited SP.

After the terminal receives the bootstrap ESG of the visited SP through broadcast, the bootstrap ESG server of the visited SP broadcasts the bootstrap ESG of the visited SP, and the terminal receives the bootstrap ESG of the visited SP broadcast by the bootstrap ESG server according to the known address specified in the protocol, thus obtaining the bootstrap ESG of the visited SP, without performing step 1206 in Figure 12.

Step 1208: According to the received information (which is described in the bootstrap ESG of the visited SP) about the visited SP that signs a roaming agreement with the home SP, the terminal obtains the visit information of the ESG of the visited SP. If multiple SPs exist, one SP is selected from them.

Step 1209: According to the visit information of the ESG, the terminal obtains the ESG of the visited SP from the ESG server of the visited SP, and displays the ESG to the user.

The mode of the terminal obtaining the ESG of the visited SP from the ESG server of the visited SP is interaction or broadcast.

If the interaction mode is applied, the terminal sends a request message to the ESG server of the visited SP according to the visit information of the ESG. After receiving the message, the ESG server of the visited SP sends the ESG of the visited SP to the terminal.

If the broadcast mode is applied, the ESG server of the visited SP broadcasts the information that includes the ESG of the visited SP, and the terminal receives the ESG of the visited SP according to the visit information of the ESG.

The user accepts the multimedia service of the visited SP through the ESG of the visited SP.

The foregoing technical solution shows that in the method for finding a visited SP in the fifth embodiment of the present invention, the terminal only needs to configure the information about the home SP of the terminal, rather than configure both the information about the home SP of the terminal and the information about the non-home SP that signs an agreement with the home SP. The home SP of each terminal is generally fixed and seldom changes. Generally, the terminal does not need to change the home SP information of the terminal once such information is configured. Such information may be input by the user, or written by the operator when the terminal is put into use, or written in other ways. The writing mode is flexible, without participation of the home presetting server. Therefore, the terminal does not need to support specific specifications, and the technical solution may be implemented on any terminal that supports any specifications.

Meanwhile, if the home SP information configured in the terminal includes the identifier of the interactive network where the home SP is located, it is appropriate to compare the interactive network identifier first. In most cases, the interactive network identifier is enough for judging whether the terminal is roaming or not, without the need of comparing all SP information one by one. The subsequent search is performed by the discovery server of the SP, and therefore, the workload of the terminal is reduced drastically.

Further, the method for finding a visited SP in the seventh embodiment of the present invention provides a mode of visiting the bootstrap ESG server of the visited SP through interaction, which is adaptable to the scenarios of visiting through interaction.

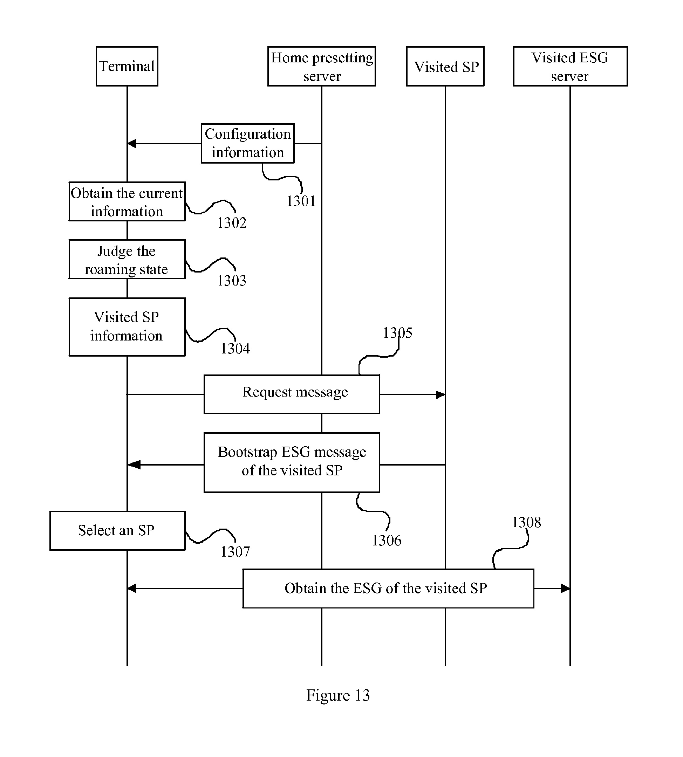

Figure 13 is a signaling flowchart of the method for finding a visited SP in the eighth embodiment of the present invention. The method includes the following steps:
Step 1301: The home presetting server sends a presetting message to the terminal. According to the presetting message given by the home presetting server, the home SP information and the information about the SP that signs a roaming agreement with the home SP are configured on the terminal, in which the information about the visited SP needs to include the identifier of the interactive network where the visited SP is located.

Depending on the actual conditions, the information about the home SP may be: an identifier of the interactive network where the home SP is located, identifier of the home SP, and URL of the discovery server of the home SP; or identifier of the IP platform where the home SP is located, and identifier of the home SP. The information about the visited SP may be: an identifier of the interactive network where the visited SP is located, identifier of the visited SP, and URL of the bootstrap ESG server of the visited SP; or identifier of the interactive network where the visited SP is located, and identifier of the visited SP.

Step 1302: The terminal obtains the current network information, which includes the interactive network identifier of the current network.

The terminal accesses the current interactive network, and obtains the current interactive network information, for example, mobile network identifiers MCC and MNC; or MCC, MNC and NSC.

Step 1303: Through comparison, the terminal judges whether it is roaming. If the terminal is roaming, the process proceeds to step 904; otherwise, the process proceeds to the non-roaming process.

The terminal compares the current network information with the home SP information configured in the terminal, and judges whether the terminal is roaming. If the current network information includes no content that matches the home SP information preset in the terminal, the terminal is roaming; otherwise, the terminal is not roaming.

In the process of comparison, the interactive network identifier may be compared first. If the current network information includes no interactive network identifier that matches the identifier (which is preset in the terminal) of the interactive network where the home SP is located, the terminal is roaming, and it is not necessary to further compare the SP information under each interactive network; if the current network information includes the interactive network identifier that matches the identifier (which is preset in the terminal) of the interactive network where the home SP is located, the terminal is not roaming.

Step 1304: The terminal searches out the information about the visited SP.

Through the interactive network identifier of the current network, the terminal searches for the information (which is configured in the terminal) about the visited SP that signs a roaming agreement with the home SP, and finds the information (which matches the interactive network identifier of the current network) about the visited SP that signs a roaming agreement with the home SP.

The information about the visited SP may be: an identifier of the interactive network where the visited SP is located, identifier of the visited SP, and URL of the bootstrap ESG server of the visited SP; or identifier of the interactive network where the visited SP is located, and identifier of the visited SP; or identifier of the visited SP, and URL of the bootstrap ESG server of the visited SP.

In this case, the terminal may obtain the DVB-H broadcast network signal parameters of the visited SP. The DVB-H broadcast network signal parameters include: channel bandwidth, central frequency of the channel, frequency deviation, protection interval, OFDM mode, and modulation mode.

After obtaining the DVB-H broadcast network signal parameters of the visited SP, the terminal may access the DVB-H broadcast network of the visited SP quickly according to the DVB-H signal parameters when it is necessary to access the DVB-H broadcast network of the visited SP.

Step 1305: The terminal sends a request message to the bootstrap ESG server of the visited SP, requesting the bootstrap ESG of the visited SP.

The terminal may receive the bootstrap ESG of the visited SP through interaction or broadcast. If the visited SP information includes the URL of the bootstrap ESG server of the visited SP, the terminal may request the bootstrap ESG of the visited SP from the bootstrap ESG server of the visited SP through interaction according to the URL of the bootstrap ESG server of the visited SP.

When the terminal receives the bootstrap ESG of the visited SP through interaction, the terminal sends a request message to the bootstrap ESG server of the visited SP according to the URL of the bootstrap ESG server of the visited SP, requesting the bootstrap ESG of the visited SP. The request message includes a request type.

Step 1306: The terminal receives the bootstrap ESG of the visited SP.

After the terminal receives the bootstrap ESG of the visited SP through interaction, the bootstrap ESG server of the visited SP sends the bootstrap ESG of the visited SP to the terminal according to the received request message, and the terminal obtains the bootstrap ESG of the visited SP.

After the terminal receives the bootstrap ESG of the visited SP through broadcast, the bootstrap ESG server of the visited SP broadcasts the bootstrap ESG of the visited SP, and the terminal receives the bootstrap ESG of the visited SP broadcast by the bootstrap ESG server according to the known address specified in the protocol, thus obtaining the bootstrap ESG of the visited SP, without performing step 1305 in Figure 13.

Step 1307: According to the received information (which is described in the bootstrap ESG of the visited SP) about the visited SP that signs a roaming agreement with the home SP, the terminal obtains the visit information of the ESG of the visited SP. If multiple SPs exist, one SP is selected from them.

Step 1308: According to the visit information of the ESG, the terminal obtains the ESG of the visited SP from the ESG server of the visited SP, and displays the ESG to the user.

The mode of the terminal obtaining the ESG of the visited SP from the ESG server of the visited SP is interaction or broadcast.

If the interaction mode is applied, the terminal sends a request message to the ESG server of the visited SP according to the visit information of the ESG. After receiving the message, the ESG server of the visited SP sends the ESG of the visited SP to the terminal.

If the broadcast mode is applied, the ESG server of the visited SP broadcasts the information that includes the ESG of the visited SP, and the terminal receives the ESG of the visited SP according to the visit information of the ESG.

The user accepts the multimedia service of the visited SP through the ESG of the visited SP.

As described above, in the method for finding a visited SP in the eighth embodiment of the present invention, if the home SP information configured in the terminal includes the identifier of the interactive network where the home SP is located, it is appropriate to compare the interactive network identifier first. In most cases, the interactive network identifier is enough for judging whether the terminal is roaming or not, without the need of comparing all SP information one by one. In the process of searching for the information about the visited SP, the information about the visited SP is obtained only by comparing the interactive network identifier, and therefore, the workload of the terminal is reduced drastically.

Further, the method for finding a visited SP in the eighth embodiment of the present invention provides a mode of visiting the bootstrap ESG server of the visited SP through interaction, which is adaptable to the scenarios of visiting through interaction.

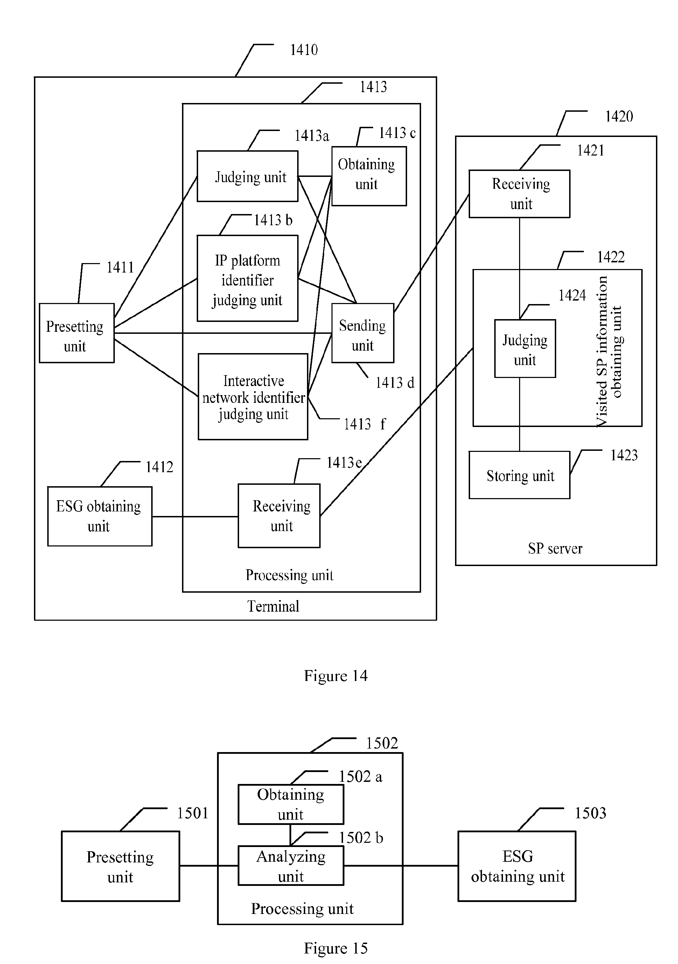

Figure 14 shows a structure of a system for finding a visited SP in the first embodiment of the present invention. The system includes a terminal 1410 and an SP server 1420, as described below:
The terminal 1410 includes:
   a presetting unit 1411, adapted to: preset the home SP information;
   preset the URL of the bootstrap ESG server of the home SP, preset the identifier of the home SP, and preset the identifier of the IP platform where the home SP is located;
   a processing unit 1413, adapted to: obtain the current network information; send the current network information to the bootstrap ESG server 1020 of the home SP according to the URL of the bootstrap ESG server included in the home SP information; and receive the visited SP information returned by the bootstrap ESG server 1020 of the home SP;
   an ESG obtaining unit 1412, adapted to visit the bootstrap ESG server of the visited SP according to the URL of the bootstrap ESG server included in the visited SP information, and obtain the visit information of the ESG of the visited SP.

The processing unit 1413 further includes:
an obtaining unit 1413c;
a sending unit 1413d;
a receiving unit 1413e;
a judging unit 1413a, adapted to: compare the current network information with the home SP information, and determine that the terminal 1410 is roaming if the current network information includes no information that matches the home SP information;
an IP platform identifier judging unit 1413b, adapted to: compare the IP platform identifier in the current network information with the identifier (which is included in the home SP information) of the IP platform where the home SP is located, and determine that the terminal 1410 is roaming if the current network information includes no IP platform identifier that matches the identifier of the IP platform where the home SP is located;
an interactive network identifier judging unit 1413f, adapted to: compare the interactive network identifier in the current network information with the identifier (which is included in the home SP information) of the interactive network where the home SP is located, and determine that the terminal is roaming if the current network information includes no interactive network identifier that matches the identifier of the interactive network where the home SP is located.

The obtaining unit 1413c further includes:
a first obtaining unit, adapted to obtain the current network information;
a second obtaining unit, adapted to obtain the current network information.

The sending unit 1413d further includes:
a first sending unit, adapted to: send the current network information to the bootstrap ESG server of the home SP according to the URL of the bootstrap ESG server included in the home SP information;
a second sending unit, adapted to: send the current network information to the discovery server of the home SP according to the URL of the discovery server included in the home SP information.

The receiving unit 1413e further includes:
a first receiving unit, adapted to: receive the visited SP information returned by the bootstrap ESG server 1420 of the home SP;
a second receiving unit, adapted to: receive the visited SP information returned by the discovery server of the home SP.

The SP server 1420 includes:
a storing unit 1423, adapted to: store the information about the SP that covers the bootstrap ESG server 1420 and the information about the SP that signs a roaming agreement with such an SP;
a receiving unit 1421, adapted to receive a visited SP information request sent by the terminal;
a visited SP information obtaining unit 1422, adapted to: obtain visited SP information according to the stored information about the SP that signs a roaming agreement with the home SP and the current network information carried in the request after determining that the terminal is roaming, and send the visited SP information to the processing unit 1415.

The visited SP information obtaining unit 1422 further includes:
a judging unit 1424, adapted to: compare the current network information with the SP information of the server, and determine that the terminal 1410 is roaming if no matching information exists.

In the actual applications, the server 1420 of the SP may be a bootstrap ESG server of the SP, or a discovery server of the SP.

The specific working mode of the system for finding a visited SP in the first embodiment of the present invention may be obtained with reference to the method for finding a visited SP in the first, second, fifth, sixth and seventh embodiments of the present invention described above, and is not detailed further.

The terminal provided in the first embodiment of the present invention is similar to the terminal 1410 in the system for finding a visited SP in the first embodiment of the present invention, and is not detailed further.

The server of the home SP provided in the first embodiment of the present invention is similar to the bootstrap ESG server 1420 in the system for finding a visited SP in the first embodiment of the present invention, and is not detailed further.

Figure 15 shows a structure of a terminal in the second embodiment of the present invention. The terminal includes:
a presetting unit 1501, adapted to preset home SP information, where the home SP information may be: an identifier of the home SP, identifier of the IP platform where the home SP is located; or identifier of the home SP;
a processing unit 1502, adapted to: obtain the current network unit, and obtain the bootstrap ESG message of the current IP platform according to the IP platform identifier in the current network information; search for the SP information of the current network carried in the bootstrap ESG message and the information about the SP that signs a roaming agreement with each SP according to the home SP information; judge the roaming state of the terminal, and obtain the visited SP information;
an ESG obtaining unit 1503, adapted to: obtain the ESG of the visited SP according to the visited SP information.

The processing unit 1502 further includes:
an obtaining unit 1502a, adapted to obtain the current network information;
an analyzing unit 1502b, adapted to: obtain the bootstrap ESG message of the current IP platform according to the IP platform identifier in the current network information; determine that the terminal is roaming if the SP information of the current network carried in the bootstrap ESG message includes no information that matches the home SP information; search for the SP information of the current network carried in the bootstrap ESG message and the information about the SP that signs a roaming agreement with each SP according to the home SP information, and obtain the visited SP information.

The specific working mode of the terminal provided in the second embodiment of the present invention may be obtained with reference to the method for finding a visited SP in the third embodiment of the present invention described above, and is not detailed further.

As described above, the terminal provided in the first and second embodiments of the present invention includes a presetting unit and a processing unit:
the presetting unit is adapted to preset home SP information;
the processing unit is adapted to: obtain current network information, and obtain visited SP information through the home SP information and the current network information after determining that the terminal is roaming according to the current network information.

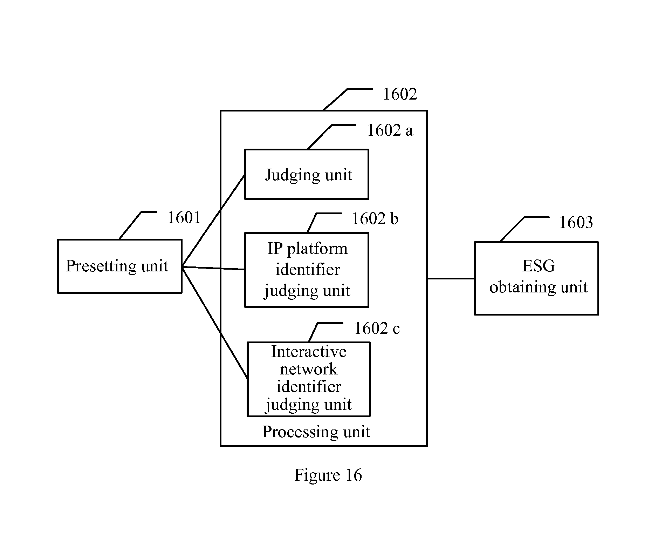

Figure 16 shows a structure of a terminal in the third embodiment of the present invention. The terminal includes:
a presetting unit 1601, adapted to: preset home SP information and the information about the visited SP that signs a roaming agreement with the home SP;
a processing unit 1602, adapted to: obtain current network information; search for the current network information according to the network identifier included in the visited SP information after determining that the terminal is roaming according to the current network information and the home SP information; and obtain the visited SP information from the current network information;
an ESG obtaining unit 1603, adapted to visit the bootstrap ESG server of the visited SP according to the URL of the bootstrap ESG server included in the visited SP information, and obtain the visit information of the ESG of the visited SP.

The processing unit 1602 further includes:
a first processing unit, adapted to: obtain current network information; search for the current network information according to the IP platform identifier included in the visited SP information after determining that the terminal is roaming according to the current network information and the home SP information; and obtain the visited SP information from the current network information;
a second processing unit, adapted to: obtain current network information; search for the current network information according to the interactive network identifier included in the visited SP information after determining that the terminal is roaming according to the current network information and the home SP information; and obtain the visited SP information from the current network information.

The processing unit 1602 further includes:
a judging unit 1602a, adapted to: compare the home SP information with the current network information, and determine that the terminal is roaming if the current network information includes no information that matches the home SP information;
an IP platform identifier judging unit 1602b, adapted to: compare the IP platform identifier in the current network information with the identifier (which is included in the home SP information) of the IP platform where the home SP is located, and determine that the terminal is roaming if the current network information includes no IP platform identifier that matches the identifier of the IP platform where the home SP is located;
an interactive network identifier judging unit 1602c, adapted to: compare the interactive network identifier in the current network information with the identifier (which is included in the home SP information) of the interactive network where the home SP is located, and determine that the terminal 1602 is roaming if the current network information includes no interactive network identifier that matches the identifier of the interactive network where the home SP is located.

The specific working mode of the terminal provided in the third embodiment of the present invention may be obtained with reference to the method for finding a visited SP in the fourth and eighth embodiment of the present invention described above, and is not detailed further.

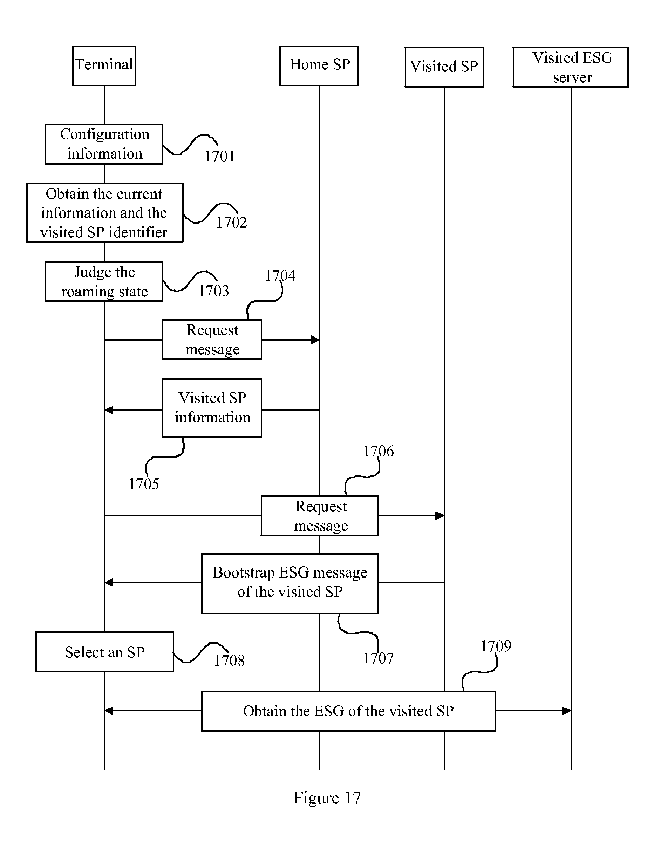

Figure 17 is a signaling flowchart of the method for finding a visited SP in the ninth embodiment of the present invention. The method includes the following steps:

Step 1701: The terminal presets information about the home SP.

Many IP platforms may exist in an area and each IP platform may have multiple SPs. Among the SPs, some SPs are differentiated from other SPs only through the SP identifier, and some SPs are differentiated from other SPs through both the identifier of the IP platform of the SP and the identifier of the SP. Meanwhile, in order for the terminal to access the discovery server of the home SP, it is also necessary to preset the URL of the discovery server of the home SP. Therefore, the information about the home SP may be: an identifier of the IP platform where the home SP is located, identifier of the home SP, and URL of the discovery server of the home SP; or identifier of the home SP, and URL of the discovery server of the home SP.

As required, the information about the home SP may further include: original network ID of the home SP, and network ID.

Step 1702: The terminal obtains the current network information.

The terminal accesses the current DVB-H network, receives the NIT_actual in the TS, resolves the linkage_descriptor in it, and obtains the identifier of the IP platform, and so on.

At this time, the current original network ID and the network ID may also be obtained as required.

At this time, the bootstrap ESG of the current IP platform may be received, and the SP identifier of the current network may be obtained as required. There may be one or more current IP platforms; and there are one or more SPs of the current network.

Step 1703: The terminal judges whether it is roaming. If the terminal is roaming, the process proceeds to step 1704; otherwise, the process proceeds to the non-roaming processing.

The terminal compares the current network information with the home SP information configured in the terminal, and judges whether the terminal is roaming. If the current network information includes no content that matches the home SP information preset in the terminal, the terminal is roaming; otherwise, the terminal is not roaming.

If the home SP information configured in the terminal includes the identifier of the IP platform where the home SP is located, the IP platform identifier may be compared first. If the current network information includes no IP platform identifier that matches the identifier (which is preset in the terminal) of the IP platform where the home SP is located, the terminal is roaming, and it is not necessary to further compare the SP information under each IP platform. If the current network information includes the IP platform identifier that matches the identifier (which is preset in the terminal) of the IP platform where the home SP is located, when the service scope of the IP platform is consistent with that of the SP, the terminal is not roaming, and it is not necessary to further compare the SP information under each IP platform; when the service scope of the IP platform is different from that of the SP, the original network ID and the network ID may be further compared to check whether there exists the information that matches the original network ID and the network ID (which are preset in the terminal) of the home SP. If no such information exists, the terminal is roaming; otherwise, the terminal is not roaming. Alternatively, the home SP identifier configured in the terminal is compared. If the SP identifier of the current network includes no identifier that matches the home SP identifier preset in the terminal, the terminal is roaming.

Step 1704: The terminal sends a request message to the home SP, requesting the information about the visited SP that signs a roaming agreement with the home SP.

Through the preset URL of the discovery server of the home SP, the terminal sends a request message to the discovery server of the home SP, requesting the information about the visited SP that signs a roaming agreement with the home SP. This request message includes: current network information of the terminal, and identifier of the home SP; or current network information of the terminal, identifier of the home SP, and identifier of the IP platform where the home SP is located; or current network information of the terminal.

Step 1705: After receiving the request message, the home SP searches out the information about the visited SP that signs a roaming agreement with the home SP among the current network information of the terminal, and sends the information about the visited SP that signs a roaming agreement with the home SP to the terminal.

After receiving the request message, the discovery server of the home SP searches out the information about the visited SP among the current network information according to the stored information about the visited SP that signs a roaming agreement with the home SP, and sends the information about the visited SP that signs a roaming agreement with the home SP to the terminal. The information about the visited SP may be: an identifier of the IP platform where the visited SP is located, identifier of the visited SP, and URL of the bootstrap ESG server of the visited SP; or identifier of the visited SP, and URL of the bootstrap ESG server of the visited SP; or identifier of the IP platform where the visited SP is located, and identifier of the visited SP; or identifier of the visited SP, URL of the ESG of the visited SP, and identifier of the IP platform where the visited SP is located; or identifier of the visited SP.

After obtaining the information about the visited SP, the terminal proceeds with the subsequent process to accept the service of the visited SP.

Step 1706: The terminal sends a request message to the bootstrap ESG server of the visited SP, requesting the bootstrap ESG of the visited SP.

The terminal may receive the bootstrap ESG of the visited SP through interaction or broadcast. If the visited SP information returned by the discovery server of the home SP includes the URL of the bootstrap ESG server of the visited SP, the terminal may request the bootstrap ESG of the visited SP from the bootstrap ESG server of the visited SP through interaction according to the URL of the bootstrap ESG server of the visited SP.

When the terminal receives the bootstrap ESG of the visited SP through interaction, the terminal sends a request message to the bootstrap ESG server of the visited SP according to the URL of the bootstrap ESG server of the visited SP, requesting the bootstrap ESG of the visited SP. The request message includes a request type.

Step 1707: The terminal receives the bootstrap ESG of the visited SP.

After the terminal receives the bootstrap ESG of the visited SP through interaction, the bootstrap ESG server of the visited SP sends the bootstrap ESG of the visited SP to the terminal according to the received request message, and the terminal obtains the bootstrap ESG of the visited SP.

After the terminal receives the bootstrap ESG of the visited SP through broadcast, the bootstrap ESG server of the visited SP broadcasts the bootstrap ESG of the visited SP, and the terminal receives the bootstrap ESG of the visited SP broadcast by the bootstrap ESG server according to the known address specified in the protocol, thus obtaining the bootstrap ESG of the visited SP, without performing step 1706 in Figure 17.

Step 1708: According to the received information (which is described in the bootstrap ESG of the visited SP) about the visited SP that signs a roaming agreement with the home SP, the terminal obtains the visit information of the ESG of the visited SP. If multiple SPs exist, one SP is selected from them.

Step 1709: According to the visit information of the ESG, the terminal obtains the ESG of the visited SP from the ESG server of the visited SP, and displays the ESG to the user.

The mode of the terminal obtaining the ESG of the visited SP from the ESG server of the visited SP is interaction or broadcast.

If the interaction mode is applied, the terminal sends a request message to the ESG server of the visited SP according to the visit information of the ESG. After receiving the message, the ESG server of the visited SP sends the ESG of the visited SP to the terminal.

If the broadcast mode is applied, the ESG server of the visited SP broadcasts the information that includes the ESG of the visited SP, and the terminal receives the ESG of the visited SP according to the visit information of the ESG.

The user accepts the multimedia service of the visited SP through the ESG of the visited SP.

The foregoing technical solution shows that in the method for finding a visited SP in the ninth embodiment of the present invention, the terminal only needs to configure the information about the home SP of the terminal, rather than configure both the information about the home SP of the terminal and the information about the non-home SP that signs an agreement with the home SP. The home SP of each terminal is generally fixed and seldom changes. Generally, the terminal does not need to change the home SP information of the terminal once such information is configured. Such information may be input by the user, or written by the operator when the terminal is put into use, or written in other ways. The writing mode is flexible, without participation of the home presetting server. Therefore, the terminal does not need to support specific specifications, and the technical solution may be implemented on any terminal that supports any specifications.

Meanwhile, if the home SP information configured in the terminal includes the identifier of the IP platform where the home SP is located, it is appropriate to compare the IP platform identifier first. In most cases, the IP platform identifier is enough for judging whether the terminal is roaming or not, without the need of comparing all SP information one by one. The subsequent search is performed by the discovery server of the SP, and therefore, the workload of the terminal is reduced drastically. Alternatively, the home SP identifier configured in the terminal is compared. If the SP identifier of the current network information includes no home SP identifier preset in the terminal, the terminal is roaming.

Further, the method for finding a visited SP in the ninth embodiment of the present invention provides a mode of visiting the bootstrap ESG server of the visited SP through interaction, which is adaptable to the scenarios of visiting through interaction.

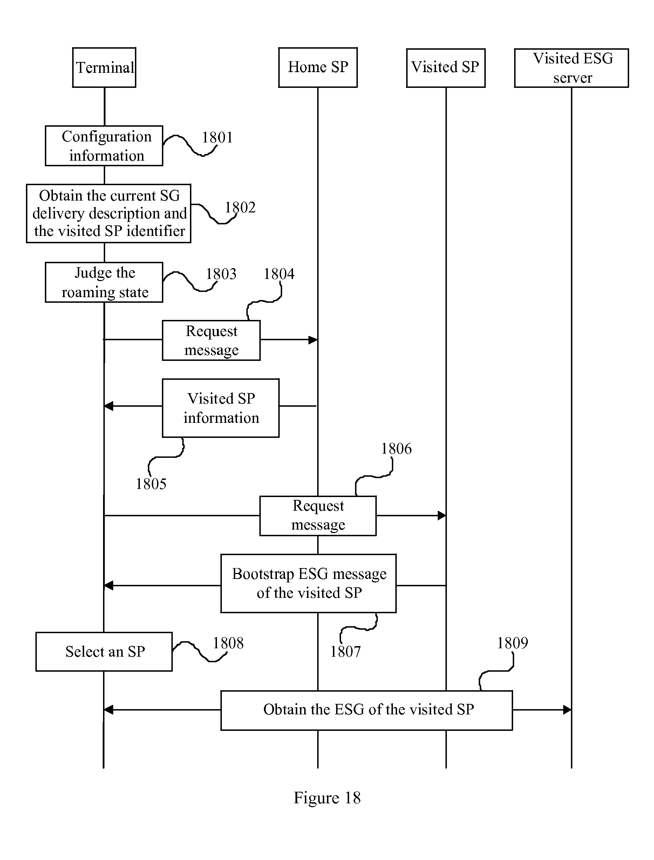

Figure 18 is a signaling flowchart of the method for finding a visited SP in the tenth embodiment of the present invention. The method includes the following steps:
Step 1801: The terminal presets information about the home SP.

The home SP information may be: an identifier of the home SP, and URL of the discovery server of the home SP.

Step 1802: The terminal obtains the current network information, which may include the SP identifier as required.

The terminal obtains the IP platform identifier of the DVB-H network;

or obtains the identifier of the mobile network, for example, MCC and MNC; or MCC, MNC and NSC.

As required, the terminal may receive the current SGDD, and obtain the SP identifier, and so on. There may be one or more current SGDDs.

Step 1803: The terminal judges whether it is roaming. If the terminal is roaming, the process proceeds to step 1804; otherwise, the process proceeds to the non-roaming processing.

The terminal compares the current network information with the home SP information configured in the terminal, and judges whether the terminal is roaming. If the current network information includes no content that matches the home SP information preset in the terminal, the terminal is roaming; otherwise, the terminal is not roaming.

Alternatively, the home SP identifier configured in the terminal is compared. If the SP identifier of the current network information includes no home SP identifier preset in the terminal, the terminal is roaming.

Step 1804: The terminal sends a request message to the home SP, requesting the information about the visited SP that signs a roaming agreement with the home SP.

Through the preset URL of the discovery server of the home SP, the terminal sends a request message to the discovery server of the home SP, requesting the information about the visited SP that signs a roaming agreement with the home SP. This request message includes: current network information of the terminal, and identifier of the home SP; or current network information of the terminal.

Step 1805: After receiving the request message, the home SP searches out the information about the visited SP that signs a roaming agreement with the home SP among the current network information of the terminal, and sends the information about the visited SP that signs a roaming agreement with the home SP to the terminal.

After receiving the request message, the discovery server of the home SP searches out the information about the visited SP among the current network information according to the stored information about the visited SP that signs a roaming agreement with the home SP, and sends the information about the visited SP that signs a roaming agreement with the home SP to the terminal. The information about the visited SP may be: an identifier of the visited SP, URL of the SGDD server of the visited SP; or identifier of the IP platform where the visited SP is located, and identifier of the visited SP; or identifier of the visited SP.

After obtaining the information about the visited SP, the terminal proceeds with the subsequent process to accept the service of the visited SP.

Step 1806: The terminal sends a request message to the SGDD server of the visited SP, requesting the SGDD of the visited SP.

The terminal may receive the SGDD of the visited SP through interaction or broadcast. If the visited SP information returned by the discovery server of the home SP includes the URL of the SGDD server of the visited SP, the terminal may request the SGDD of the visited SP from the SGDD server of the visited SP through interaction according to the URL of the SGDD server of the visited SP.

Step 1807: The terminal receives the SGDD of the visited SP.

After the terminal receives the SGDD of the visited SP through interaction, the SGDD server of the visited SP sends the SGDD of the visited SP to the terminal according to the received request message, and the terminal obtains the SGDD of the visited SP.

After the terminal receives the SGDD of the visited SP through broadcast, the SGDD server of the visited SP broadcasts the SGDD of the visited SP, and the terminal receives the SGDD of the visited SP broadcast by the SGDD server according to the known address specified in the protocol, thus obtaining the SGDD of the visited SP, without performing step 1806 in Figure 18.

Step 1808: According to the received information (which is described in the SGDD of the visited SP) about the visited SP that signs a roaming agreement with the home SP, the terminal obtains the visit information of the SG of the visited SP. If multiple SPs exist, one SP is selected from them.

Step 1809: According to the visit information of the SG, the terminal obtains the SG of the visited SP from the SG server of the visited SP, and displays it to the user.

The mode of the terminal obtaining the SG of the visited SP from the SG server of the visited SP may be interaction or broadcast.

If the interaction mode is applied, the terminal sends a request message to the SG server of the visited SP according to the visit information of the SG. After receiving the message, the SG server of the visited SP sends the SG of the visited SP to the terminal.

If the broadcast mode is applied, the SG server of the visited SP broadcasts the information that includes the SG of the visited SP, and the terminal receives the SG of the visited SP according to the visit information of the SG.

The user accepts the multimedia service of the visited SP through the SG of the visited SP.

The foregoing technical solution shows that in the method for finding a visited SP in the tenth embodiment of the present invention, the terminal only needs to configure the information about the home SP of the terminal, rather than configure both the information about the home SP of the terminal and the information about the non-home SP that signs an agreement with the home SP. The home SP of each terminal is generally fixed and seldom changes. Generally, the terminal does not need to change the home SP information of the terminal once such information is configured. Such information may be input by the user, or written by the operator when the terminal is put into use, or written in other ways. The writing mode is flexible, without participation of the home presetting server. Therefore, the terminal does not need to support specific specifications, and the technical solution may be implemented on any terminal that supports any specifications.

The home SP identifier configured in the terminal is compared. If the SP identifier of the current network information includes no home SP identifier preset in the terminal, the terminal is roaming.

Further, the method for finding a visited SP in the tenth embodiment of the present invention provides a mode of visiting the SGDD server of the visited SP through interaction, which is adaptable to the scenarios of visiting through interaction.

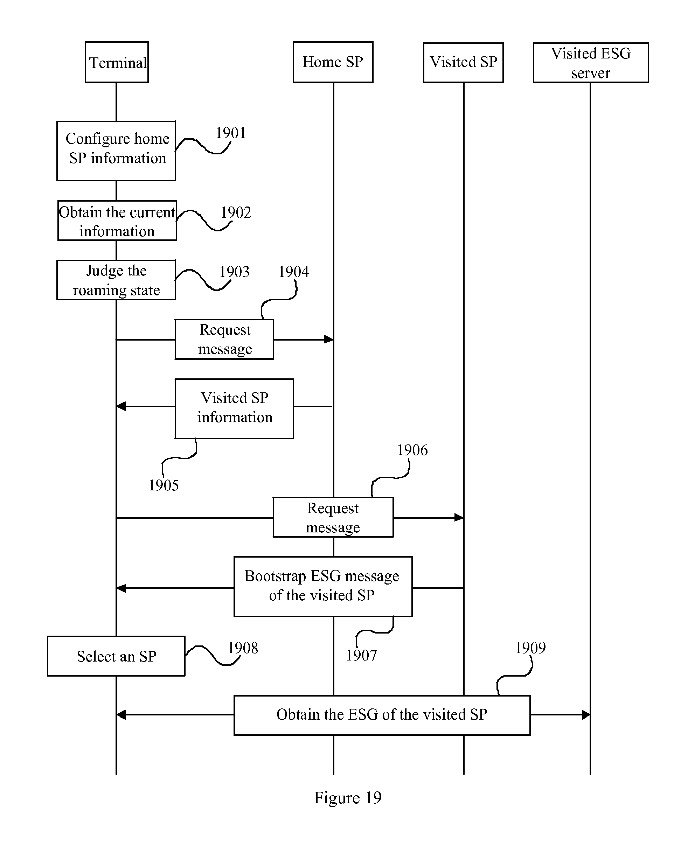

Figure 19 is a signaling flowchart of the method for finding a visited SP in the 11th embodiment of the present invention. The method includes the following steps:
Step 1901: The terminal presets information about the home SP.

Depending on the actual conditions, the information about the home SP may be: an identifier of the interactive network where the home SP is located, identifier of the home SP, and URL of the discovery server of the home SP; or identifier of the interactive network where the home SP is located, and URL of the discovery server of the home SP.

The identifier of the interactive network where the home SP is located may be an identifier of the mobile network where the SP is located, for example, MCC and MNC; or MCC, MNC and NSC.

Step 1902: The terminal obtains the current network information.

The terminal accesses the current interactive network, and obtains the current interactive network information, for example, mobile network identifiers MCC and MNC; or MCC, MNC and NSC.

Step 1903: The terminal judges whether it is roaming. If the terminal is roaming, the process proceeds to step 1904; otherwise, the process proceeds to the non-roaming processing.

The terminal compares the current network information with the home SP information configured in the terminal, and judges whether the terminal is roaming. If the current network information includes no content that matches the home SP information preset in the terminal, the terminal is roaming; otherwise, the terminal is not roaming.

When the home SP information configured in the terminal includes the identifier of the interactive network where the home SP is located, the interactive network identifier may be compared first. If the current network information includes no interactive network identifier that matches the identifier (which is preset in the terminal) of the interactive network where the home SP is located, the terminal is roaming; if the current network information includes the interactive network identifier that matches the identifier (which is preset in the terminal) of the interactive network where the home SP is located, the terminal is not roaming.

Step 1904: The terminal sends a request message to the home SP, requesting the information about the visited SP that signs a roaming agreement with the home SP.

Through the preset URL of the discovery server of the home SP, the terminal sends a request message to the discovery server of the home SP, requesting the information about the visited SP that signs a roaming agreement with the home SP. This request message includes: current network information of the terminal, and identifier of the home SP; or current network information of the terminal, identifier of the home SP, and identifier of the interactive network where the home SP is located.

At this time, the terminal may request the DVB-H broadcast network signal parameters of the visited SP as required.

Step 1905: After receiving the request message, the home SP searches out the information about the visited SP that signs a roaming agreement with the home SP among the current network information of the terminal, and sends the information about the visited SP that signs a roaming agreement with the home SP to the terminal.

After receiving the request message, the discovery server of the home SP searches out the information about the visited SP among the current network information according to the stored information about the visited SP that signs a roaming agreement with the home SP, and sends the information about the visited SP that signs a roaming agreement with the home SP to the terminal. The information about the visited SP may be: an identifier of the IP platform where the visited SP is located, identifier of the visited SP, and URL of the SGDD server of the visited SP; or identifier of the visited SP, and URL of the SGDD server of the visited SP; or identifier of the IP platform where the visited SP is located, and identifier of the visited SP; or identifier of the visited SP.

After obtaining the information about the visited SP, the terminal proceeds with the subsequent process to accept the service of the visited SP.

If the terminal also requests the DVB-H broadcast network signal parameters of the visited SP, the home SP may also send the DVB-H broadcast network signal parameters of the visited SP to the terminal.

The DVB-H broadcast network signal parameters include: channel bandwidth, central frequency of the channel, frequency deviation, protection interval, OFDM mode, and modulation mode.

After receiving the DVB-H broadcast network signal parameters of the visited SP, the terminal may access the DVB-H broadcast network of the visited SP quickly according to the DVB-H signal parameters when it is necessary to access the DVB-H broadcast network of the visited SP.

Step 1906: The terminal sends a request message to the SGDD server of the visited SP, requesting the SGDD of the visited SP.

The terminal may receive the SGDD of the visited SP through interaction or broadcast. If the visited SP information returned by the discovery server of the home SP includes the URL of the SGDD server of the visited SP, the terminal may request the SGDD of the visited SP from the SGDD server of the visited SP through interaction according to the URL of the SGDD server of the visited SP.

After the terminal receives the SGDD of the visited SP through interaction, the terminal sends a request message to the SGDD server of the visited SP according to the URL of the SGDD server of the visited SP, requesting the SGDD of the visited SP.

Step 1907: The terminal receives the ESG of the visited SP.

After the terminal receives the ESG of the visited SP through interaction, the SGDD server of the visited SP sends the SGDD of the visited SP to the terminal according to the received request message, and the terminal obtains the SGDD of the visited SP.

After the terminal receives the SGDD of the visited SP through broadcast, the SGDD server of the visited SP broadcasts the SGDD of the visited SP, and the terminal receives the SGDD of the visited SP broadcast by the SGDD server according to the known address specified in the protocol, thus obtaining the SGDD of the visited SP, without performing step 1906 in Figure 19.

Step 1908: According to the received information (which is described in the SGDD of the visited SP) about the visited SP that signs a roaming agreement with the home SP, the terminal obtains the visit information of the SG of the visited SP. If multiple SPs exist, one SP is selected from them.

Step 1909: According to the visit information of the SG, the terminal obtains the SG of the visited SP from the SG server of the visited SP, and displays it to the user.

The mode of the terminal obtaining the SG of the visited SP from the SG server of the visited SP may be interaction or broadcast.

If the interaction mode is applied, the terminal sends a request message to the SG server of the visited SP according to the visit information of the SG. After receiving the message, the SG server of the visited SP sends the SG of the visited SP to the terminal.

If the broadcast mode is applied, the SG server of the visited SP broadcasts the information that includes the SG of the visited SP, and the terminal receives the SG of the visited SP according to the visit information of the SG.

The user accepts the multimedia service of the visited SP through the SG of the visited SP.

The foregoing technical solution shows that in the method for finding a visited SP in the 11th embodiment of the present invention, the terminal only needs to configure the information about the home SP of the terminal, rather than configure both the information about the home SP of the terminal and the information about the non-home SP that signs an agreement with the home SP. The home SP of each terminal is generally fixed and seldom changes. Generally, the terminal does not need to change the home SP information of the terminal once such information is configured. Such information may be input by the user, or written by the operator when the terminal is put into use, or written in other ways. The writing mode is flexible, without participation of the home presetting server. Therefore, the terminal does not need to support specific specifications, and the technical solution may be implemented on any terminal that supports any specifications.

Meanwhile, if the home SP information configured in the terminal includes the identifier of the interactive network where the home SP is located, it is appropriate to compare the interactive network identifier first. In most cases, the interactive network identifier is enough for judging whether the terminal is roaming or not, without the need of comparing all SP information one by one. The subsequent search is performed by the discovery server of the SP, and therefore, the workload of the terminal is reduced drastically.

Further, the method for finding a visited SP in the 11th embodiment of the present invention provides a mode of visiting the SGDD server of the visited SP through interaction, which is adaptable to the scenarios of visiting through interaction.

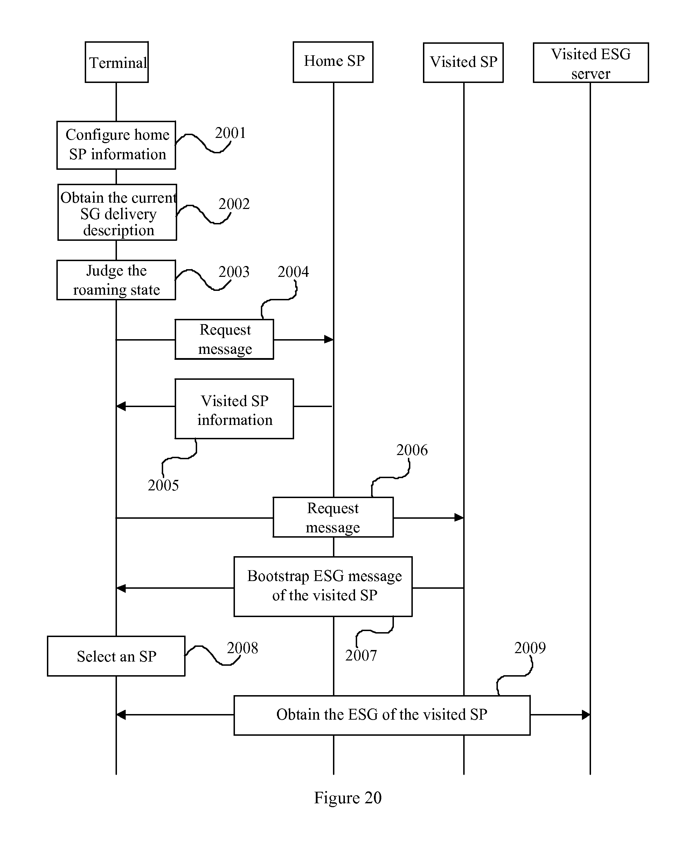

Figure 20 is a signaling flowchart of the method for finding a visited SP in the 12th embodiment of the present invention. The method includes the following steps:
Step 2001: The terminal presets information about the home SP.

The information about the home SP may be an identifier of the home SP.

Step 2002: The terminal obtains the current network information, and receives the current SGDD.

The terminal receives the current SGDD. There may be one or more current SGDDs.

Step 2005: The terminal searches out the visit information of the SG of the visited SP.

The SGDD describes the SP information of the current network, and information about the SP that signs a roaming agreement with each SP. The information about the SP that signs a roaming agreement with the visited SP of the terminal needs to include the home SP information of the terminal. Therefore, the terminal may search for the SP information of the current network descried in the SGDD and the information about the SP that signs a roaming agreement with the SP in the current network to check whether there exists the information that matches the home SP information configured in the terminal. If any matching SP information is found in the current network, the terminal is not roaming, and the terminal goes to the non-roaming processing; if any matching information about the SP that signs a roaming agreement with the SP in the current network is found, the SP in the current network has signed a roaming agreement with the home SP of the terminal and may become a visited SP of the terminal, and the terminal obtains the visit information of the SG of the visited SP from the visited SP.

Step 2006: According to the visit information of the SG, the terminal obtains the SG of the visited SP from the SG server of the visited SP, and displays it to the user.

The mode of the terminal obtaining the SG of the visited SP from the SG server of the visited SP may be interaction or broadcast.

If the interaction mode is applied, the terminal sends a request message to the SG server of the visited SP according to the visit information of the SG. After receiving the message, the SG server of the visited SP sends the SG of the visited SP to the terminal.

If the broadcast mode is applied, the SG server of the visited SP broadcasts the information that includes the SG of the visited SP, and the terminal receives the SG of the visited SP according to the visit information of the SG.

The user accepts the multimedia service of the visited SP through the SG of the visited SP.

The foregoing technical solution shows that in the method for finding a visited SP in the 12th embodiment of the present invention, the terminal only needs to configure the information about the home SP of the terminal, rather than configure both the information about the home SP of the terminal and the information about the non-home SP that signs an agreement with the home SP. The home SP of each terminal is generally fixed and seldom changes. Generally, the terminal does not need to change the home SP information of the terminal once such information is configured. Such information may be input by the user, or written by the operator when the terminal is put into use, or written in other ways. The writing mode is flexible, without participation of the home presetting server. Therefore, the terminal does not need to support specific specifications, and the technical solution may be implemented on any terminal that supports any specifications.

A terminal provided in the fourth embodiment of the present invention includes:
a presetting unit, adapted to: preset home SP information;
preset the URL of the bootstrap ESG server of the home SP, preset the identifier of the home SP, and preset the identifier of the IP platform where the home SP is located;
a processing unit, adapted to: obtain the current network information; send the current network information to the bootstrap ESG server of the home SP according to the URL of the bootstrap ESG server included in the home SP information; and receive the visited SP information returned by the bootstrap ESG server of the home SP;
an ESG obtaining unit, adapted to visit the bootstrap ESG server of the visited SP according to the URL of the bootstrap ESG server included in the visited SP information, and obtain the visit information of the ESG of the visited SP.

The processing unit further includes:
an obtaining unit;
a sending unit;
a receiving unit;
a judging unit, adapted to: compare the current network information with the home SP information, and determine that the terminal is roaming if the current network information includes no information that matches the home SP information;
an IP platform identifier judging unit, adapted to: compare the IP platform identifier in the current network information with the identifier (which is included in the home SP information) of the IP platform where the home SP is located, and determine that the terminal is roaming if the current network information includes no IP platform identifier that matches the identifier of the IP platform where the home SP is located;
an interactive network identifier judging unit, adapted to: compare the interactive network identifier in the current network information with the identifier (which is included in the home SP information) of the interactive network where the home SP is located, and determine that the terminal is roaming if the current network information includes no interactive network identifier that matches the identifier of the interactive network where the home SP is located;
an SP identifier judging unit, adapted to: compare the SP identifier in the current network information with the home SP identifier included in the home SP information, and determine that the terminal is roaming if the current network information includes no SP identifier that matches the home SP identifier.

The obtaining unit further includes:
a first obtaining unit, adapted to obtain the current network information;
a second obtaining unit, adapted to obtain the current network information.

The sending unit further includes:
a first sending unit, adapted to: send the current network information to the bootstrap ESG server of the home SP according to the URL of the bootstrap ESG server included in the home SP information;
a second sending unit, adapted to: send the current network information to the discovery server of the home SP according to the URL of the discovery server included in the home SP information.

The receiving unit further includes:
a first receiving unit, adapted to: receive the visited SP information returned by the bootstrap ESG server of the home SP;
a second receiving unit, adapted to: receive the visited SP information returned by the discovery server of the home SP.

It is understandable to those skilled in the art that all or part of the steps of the foregoing embodiments can be implemented by hardware following instructions of programs. The programs may be stored in a computer readable storage medium. The storage medium may be a read-only memory device, such as a magnetic disk or a compact disk.

The above is a detailed description of a method, system, terminal and server for finding a visited SP in embodiments of the present invention. Although the invention has been described through some exemplary embodiments, the invention is not limited to such embodiments. It is apparent that those skilled in the art can make various modifications and variations to the invention without departing from the scope of the invention. The invention shall cover the modifications and variations provided that they fall in the scope of protection defined by the following claims or their equivalents.

## Claims

1. A method for finding a visited Service Provider (SP), comprising:
obtaining, by a terminal, current network information after accessing a network; and
obtaining visited SP information through preset home SP information and the current network information.

2. The method of claim 1, wherein the obtaining the visited SP information through preset home SP information and the current network information comprises:
sending, by the terminal, the current network information to a bootstrap Electronic Service Guide (ESG) server according to a Uniform Resource Locator (URL) of the bootstrap ESG server in the home SP information; and
receiving the visited SP information found by the bootstrap ESG server from the current network information.

3. The method of claim 2, wherein the current network information comprises at least one of:
a current Internet Protocol (IP) platform identifier, a current Service Guide (SG) identifier, a current broadcast network identifier, a current SP identifier, and a current interactive network identifier; and
the visited SP information comprises at least one of:
a visited SP identifier, an identifier of the IP platform where the visited SP is located, an SG identifier of the visited SP, and a bootstrap SG identifier of the visited SP.

4. The method of claim 2, further comprising:
determining that the terminal is roaming according to the current network information after obtaining the current network information.

5. The method of claim 4, wherein:
the process of determining the terminal is roaming according to the current network information comprises:
sending, by the terminal, the current network information to the bootstrap ESG server of the home SP;
comparing, by the bootstrap ESG server of the home SP, the current network information with the home SP information, and determining that the terminal is roaming if no matching information exists.

6. The method of claim 4, wherein:
the process of determining that the terminal is roaming according to the current network information comprises:
comparing, by the terminal, the current network information with the home SP information, and determining that the terminal is roaming if the current network information comprises no information that matches the home SP information.

7. The method of claim 4, wherein:
the process of determining that the terminal is roaming according to the current network information comprises:
comparing, by the terminal, the IP platform identifier in the current network information with the identifier (which is in the home SP information) of the IP platform where the home SP is located, and determining that the terminal is roaming if the current network information comprises no IP platform identifier that matches the identifier of the IP platform where the home SP is located.

8. The method of claim 4, wherein:
the process of determining that the terminal is roaming according to the current network information comprises:
comparing, by the terminal, the SP identifier in the current network information with the home SP identifier in the home SP information, and determining that the terminal is roaming if the current network information comprises no SP identifier that matches the home SP identifier.

9. The method of claim 8, wherein the current network information is a current service guide delivery description.

10. The method of claim 1, wherein the obtaining the visited SP information through preset home SP information and the current network information comprises:
sending, by the terminal, the current network information to a discovery server according to a Uniform Resource Locator (URL) of the discovery server in the home SP information; and
receiving the visited SP information obtained by the discovery server according to the information about an SP that signs a roaming agreement with the home SP and the current network information.

11. The method of claim 10, wherein the current network information comprises at least one of:
a current Internet Protocol (IP) platform identifier, a current Service Guide (SG) identifier, a current broadcast network identifier, a current SP identifier, and a current interactive network identifier; and
the visited SP information comprises at least one of:
a visited SP identifier, an identifier of the IP platform where the visited SP is located, an SG identifier of the visited SP, and a bootstrap SG identifier of the visited SP.

12. The method of claim 10, further comprising:
determining that the terminal is roaming according to the current network information after obtaining the current network information.

13. The method of claim 12, wherein:
the process of determining that the terminal is roaming according to the current network information comprises:
sending, by the terminal, the current network information to a discovery server of the home SP;
comparing, by the discovery server of the home SP, the current network information with the home SP information, and determining that the terminal is roaming if no matching information exists.

14. The method of claim 12, wherein:
the process of determining that the terminal is roaming according to the current network information comprises:
comparing, by the terminal, the IP platform identifier in the current network information with the identifier (which is in the home SP information) of the IP platform where the home SP is located, and determining that the terminal is roaming if the current network information comprises no IP platform identifier that matches the identifier of the IP platform where the home SP is located.

15. The method of claim 4 or 12, wherein:
the process of determining that the terminal is roaming according to the current network information comprises:
comparing, by the terminal, the interactive network identifier in the current network information with the identifier (which is in the home SP information) of the interactive network where the home SP is located, and determining that the terminal is roaming if the current network information comprises no interactive network identifier that matches the identifier of the interactive network where the home SP is located.

16. The method of any of claim 1 to claim 14, further comprising:
visiting, by the terminal, the bootstrap ESG server of the visited SP according to the URL of the bootstrap ESG server carried in the visited SP information, and obtaining visit information of the ESG of the visited SP.

17. The method of any of claim 1 to claim 14, further comprising:
accessing, by the terminal, a current broadcast network through broadcast network signal parameters carried in the visited SP information.

18. The method of claim 1, wherein the obtaining the visited SP information through preset home SP information and the current network information comprises:
obtaining, by the terminal, a bootstrap Electronic Service Guide (ESG) message of a current Internet Protocol (IP) platform according to the IP platform identifier in the current network information; and
searching the bootstrap ESG message for the SP information of the current network carried in the bootstrap ESG message and for the information about an SP that signs a roaming agreement with the SP in the current network according to the home SP information, and obtaining the visited SP information.

19. The method of claim 1, further comprising:
determining that the terminal is roaming if the SP information of the current network carried in the bootstrap ESG message carries no information that matches the home SP information.

20. A method for finding a visited Service Provider (SP), comprising:
receiving a visited SP information request sent by a terminal; and
obtaining, by an SP server, visited SP information according to information about an SP that signs a roaming agreement with a home SP and current network information carried in the request, and sending the visited SP information to the terminal.

21. The method of claim 20, wherein the current network information comprises:
a current Internet Protocol (IP) platform, and/or a current Service Guide (SG) description, and/or a current broadcast network identifier, and/or a current SP identifier, and/or a current interactive network identifier; and
the visited SP information comprises:
a visited SP identifier, and/or an identifier of the IP platform where the visited SP is located, and/or an SG identifier of the visited SP, and/or a bootstrap SG identifier of the visited SP.

22. The method of claim 21, further comprising:
comparing the SP information of the server with the current network information after receiving the request message, and determining that the terminal is roaming if no matching information exists.

23. The method of claim 21 or 22, wherein the server may be a bootstrap ESG server or a discovery server.

24. A terminal, comprising:
a presetting unit, adapted to preset information about a home Service Provider (SP); and
a processing unit, adapted to obtain current network information, and obtain visited SP information according to the home SP information and the current network information.

25. The terminal of claim 24, wherein the processing unit comprises:
a first obtaining unit, adapted to obtain the current network information;
a first sending unit, adapted to send the current network information to a bootstrap Electronic Service Guide (ESG) server of the home SP according to a Uniform Resource Locator (URL) of the bootstrap ESG server carried in the home SP information; and
a first receiving unit, adapted to receive the visited SP information returned by the bootstrap ESG server of the home SP.

26. The terminal of claim 25, wherein the processing unit further comprises:
a judging unit, adapted to compare the current network information with the home SP information, and determine that the terminal is roaming if the current network information carries no information that matches the home SP information.

27. The terminal of claim 25, wherein the processing unit further comprises:
an IP platform identifier judging unit, adapted to compare the IP platform identifier in the current network information with the identifier (which is included in the home SP information) of the IP platform where the home SP is located, and determine that the terminal is roaming if the current network information carries no IP platform identifier that matches the identifier of the IP platform where the home SP is located.

28. The terminal of claim 25, wherein the processing unit further comprises:
an SP identifier judging unit, adapted to compare the SP identifier in the current network information with the home SP identifier included in the home SP information, and determine that the terminal is roaming if the current network information comprises no SP identifier that matches the home SP identifier.

29. The terminal of claim 24, wherein the processing unit comprises:
a second obtaining unit, adapted to obtain the current network information;
a second sending unit, adapted to send the current network information to a discovery server of the home SP according to a Uniform Resource Locator (URL) of the discovery server included in the home SP information; and
a second receiving unit, adapted to receive the visited SP information returned by the discovery server of the home SP.

30. The terminal of claim 25 or 28, wherein the processing unit comprises:
an interactive network identifier judging unit, adapted to compare the interactive network identifier in the current network information with the identifier (which is included in the home SP information) of the interactive network where the home SP is located, and determine that the terminal is roaming if the current network information comprises no interactive network identifier that matches the identifier of the interactive network where the home SP is located.

31. The terminal of claim 24, 25, 26, 27, 28 or 29, further comprising:
an ESG obtaining unit, adapted to visit the bootstrap ESG server of the visited SP according to the URL of the bootstrap ESG server carried in the visited SP information, and obtain the visit information of the ESG of the visited SP.

32. The terminal of claim 24, wherein the processing unit comprises:
an obtaining unit, adapted to obtain the current network information; and
an analyzing unit, adapted to: obtain a bootstrap Electronic Service Guide (ESG) message of a current Internet Protocol (IP) platform according to an IP platform identifier in the current network information; determine that the terminal is roaming if the SP information of the current network carried in the bootstrap ESG message comprises no information that matches the home SP information; search for the SP information of the current network carried in the bootstrap ESG message and the information about an SP that signs a roaming agreement with each SP according to the home SP information, and obtain the visited SP information.

33. A Service Provider (SP) server, comprising:
a storing unit, adapted to store SP information of the server and information about an SP that signs a roaming agreement with a home SP;
a receiving unit, adapted to receive a visited SP information request sent by a terminal; and
a visited SP information obtaining unit, adapted to obtain visited SP information according to information about the SP that signs a roaming agreement with the home SP and the current network information carried in the request, and send the visited SP information to the terminal.

34. The SP server of claim 33, wherein the visited SP information obtaining unit comprises:
a judging unit, adapted to compare the current network information with the SP information of the server, and determine that the terminal is roaming if no matching information exists.

35. A method for finding a visited Service Provider (SP), comprising:
obtaining, by a terminal, current network information after accessing a network; and
searching for the current network information according to a preset network identifier of the visited SP that signs a roaming agreement with a home SP, and obtaining current visited SP information.

36. The method of claim 35, further comprising:
determining that the terminal is roaming according to the current network information after obtaining the current network information.

37. The method of claim 36, wherein the process of determining that the terminal is roaming according to the current network information comprises:
comparing the preset home SP information with the current network information, and determining that the terminal is roaming if the current network information carries no information that matches the home SP information.

38. The method of claim 36, wherein the process of determining that the terminal is roaming according to the current network information comprises:
comparing, by the terminal, the network identifier in the current network information with the preset identifier of the network where the home SP is located, and determining that the terminal is roaming if the current network information comprises no network identifier that matches the identifier of the network where the home SP is located.

39. The method of claim 35, 36, 37 or 38, wherein the network identifier is an IP platform identifier, or an interactive network identifier; and the interactive network identifier may be a mobile network identifier.

40. The method of claim 35, 36, 37 or 38, further comprising:
visiting a bootstrap Electronic Service Guide (ESG) server of the visited SP according to the URL of the bootstrap ESG server carried in the visited SP information, and obtaining visit information of the ESG of the visited SP.

41. The method of claim 35, 36, 37 or 38, further comprising:
accessing, by the terminal, a broadcast network of the visited SP through broadcast network signal parameters carried in the visited SP information.

42. A terminal, comprising:
a presetting unit, adapted to preset information about a home Service Provider (SP) and information about a visited SP that signs a roaming agreement with the home SP; and
a processing unit, adapted to obtain current network information, search for the current network information according to a network identifier carried in the visited SP information, and obtain the visited SP information from the current network information.

43. The terminal of claim 42, wherein the processing unit comprises:
a first processing unit, adapted to: obtain current network information; search for the current network information according to an Internet Protocol (IP) platform identifier carried in the visited SP information after determining that the terminal is roaming according to the current network information and the home SP information; and obtain the current visited SP information;

44. The terminal of claim 42, wherein the processing unit comprises:
a second processing unit, adapted to: obtain current network information; search for the current network information according to an interactive network identifier carried in the visited SP information after determining that the terminal is roaming according to the current network information and the home SP information; and obtain the current visited SP information.

45. The terminal of claim 42, wherein the processing unit comprises:
a judging unit, adapted to: compare the home SP information with the current network information, and determine that the terminal is roaming if the current network information comprises no information that matches the home SP information;

46. The terminal of claim 42, wherein the processing unit comprises:
an IP platform identifier judging unit, adapted to: compare the IP platform identifier in the current network information with the identifier (which is included in the home SP information) of the IP platform where the home SP is located, and determine that the terminal is roaming if the current network information carries no IP platform identifier that matches the identifier of the IP platform where the home SP is located.

47. The terminal of claim 42, wherein the processing unit comprises:
an interactive network identifier judging unit, adapted to: compare the interactive network identifier in the current network information with the identifier (which is included in the home SP information) of the interactive network where the home SP is located, and determine that the terminal is roaming if the current network information carries no interactive network identifier that matches the identifier of the interactive network where the home SP is located.

48. The terminal of claim 42, 43, 44, 45, 46 or 47, further comprising:
an Electronic Service Guide (ESG) obtaining unit, adapted to visit a bootstrap ESG server of the visited SP according to the URL of the bootstrap ESG server carried in the visited SP information, and obtain the visit information of the ESG of the visited SP.
